# DEMANDE DE BREVET EUROPEEN

(11) **EP 1 022 184 A1**
(43) Date de publication de la demande: **26.07.2000**
(21) Numéro de dépôt: 00400179.8
(22) Date de dépôt: 24.01.2000
(51) Int. Cl.: B60M 1/30

(54) **Procédé de fabrication et de rénovation d'un rail d'alimentation électrique**

(30) Priorité: 22.01.1999 FR 9900707
(71) Demandeur: Railtech International, 59590 Raismes (FR)
(72) Inventeur: Pelletier, Yves, 60240 Lavilletertre (FR)
(74) Mandataire: Martin, Jean-Jacques

(57) **Abrégé**

La présente invention concerne la fabrication d'un rail longitudinal (1) d'alimentation d'un mobile (11) en électricité, du type comportant un corps (3) de montage sur un support et une plaque (2) d'usure par le mobile (11). Le corps de montage (3) comporte une base rigide (22) et une tête (23) divisée en deux moitiés (46) retenues en précontrainte de fléchissement élastique entre des rebords (7) de la plaque d'usure (2).

Application notamment à la réalisation de rails d'alimentation électrique de véhicules ferroviaires ou d'engins de manutention.

## Description

La présente invention concerne un procédé de fabrication d'un rail longitudinal d'alimentation d'un mobile en électricité, du type comportant deux composants longitudinaux mutuellement solidaires, électriquement conducteurs, présentant des sections transversales respectives sensiblement constantes et un plan longitudinal moyen de symétrie commun, à savoir un corps de montage sur un support et une plaque d'usure par le mobile,
- le corps de montage comportant, dans des positions mutuellement opposées suivant une direction transversale dudit plan, d'une part une base longitudinale rigide de montage sur le support et d'autre part une tête longitudinale de réception de la plaque d'usure, laquelle tête est délimitée dans le sens d'un éloignement par rapport à la base, suivant ladite direction, par une face de conduction électrique, chevauchant ledit plan, et présente une contre- dépouille dans le sens d'un éloignement par rapport audit plan, respectivement de part et d'autre de la face de conduction électrique,
- la plaque d'usure comportant d'une part une bande centrale plate de transmission d'électricité au mobile, chevauchant ledit plan, présentant à l'opposé de la base suivant ladite direction une face de contact pour le mobile et vers la base suivant ladite direction une face de conduction électrique, en appui à plat sur la face de conduction électrique du corps, et d'autre part deux rebords latéraux disposés respectivement de part et d'autre dudit plan et formant une saillie vers la base, suivant ladite direction, par rapport à la bande centrale, chacun des rebords présentant vers ledit plan une face d'accrochage sur le corps, laquelle face d'accrochage se rapproche dudit plan dans le sens d'un éloignement par rapport à la bande centrale suivant ladite direction pour définir une forme en crochet en prise avec l'une, respective, des contre- dépouilles de telle sorte que la plaque d'usure soit retenue solidairement sur la tête du corps de montage par effet d'emboîtement mutuel.

A titre d'exemples non limitatifs de mobiles susceptibles d'être ainsi alimentés en électricité, on peut citer certains véhicules ferroviaires, tels que les métros, et certains engins de levage ou de manutention, tels que des ponts roulants, se déplaçant selon une trajectoire déterminée le long de laquelle on place un ou plusieurs exemplaires d'un rail du type indiqué au préambule, sur la plaque d'usure duquel s'applique un organe de captation d'électricité tel qu'un frotteur porté par le mobile.

A cet égard, un rail du type concerné par la présente invention peut aussi bien être rectiligne que courbe, auquel cas on considère comme référence de longitudinalité une fibre moyenne du rail et comme plan moyen de symétrie une surface définie par des axes de symétrie respective des différentes sections de ce rail perpendiculairement à sa fibre moyenne, comme le comprendra aisément un Homme du Métier.

De façon générale, les rails d'alimentation électrique constitués de l'association d'un corps de montage et d'une plaque d'usure solidarisés mutuellement sont bien connus, et largement répandus dans différents modes de réalisation.

Le corps de montage sert généralement au montage du rail sur des supports tels que des isolateurs et peut lui-même servir au montage de capots électriquement isolants de protection à l'encontre d'un contact accidentel avec le rail d'alimentation. Sa section transversale est généralement largement supérieure à celle de l'autre composant, et déterminée d'une part en fonction de la rigidité que l'on désire communiquer au rail et d'autre part en fonction du courant que l'on désire faire transiter par celui-ci. Pour réduire son poids, pour une section transversale déterminée, on réalise généralement ce corps de montage en aluminium ou en alliage d'aluminium.

La plaque d'usure, destinée à coopérer avec l'organe de captation d'électricité porté par le mobile, est réalisée par exemple à cet effet en acier inoxydable, plus résistant à l'usure que l'aluminium et ses alliages mais plus dense, ou encore en cuivre ou en laiton. Sa section transversale est limitée à la valeur nécessaire pour assurer un temps minimal déterminé de fonctionnement jusqu'à l'usure complète et sa forme peut varier en fonction de la façon dont elle est solidarisée avec le corps de montage.

Un mode de solidarisation par accrochage de rebords de la plaque d'usure dans des contre- dépouilles de la tête du corps de montage, de la façon indiquée en préambule, est utilisé par la Société BRECKNELL WILLIS, qui réalise le corps de montage sous forme d'un profilé d'aluminium rigide, notamment au niveau de sa tête, et la plaque d'usure sous forme de deux profilés d'acier inoxydable dont chacun correspond à une moitié de la plaque d'usure, c'est-à-dire à l'une des parties de celle-ci définies par le plan longitudinal moyen de symétrie. Les faces de conduction électrique du corps de montage et de la bande centrale de la plaque d'usure, de même que la face de contact pour le mobile, sont alors planes et perpendiculaires au plan longitudinal moyen de symétrie. Pour réaliser l'assemblage de la plaque d'usure avec le corps de montage, on porte les deux parties de la plaque d'usure, initialement indépendantes l'une de l'autre, à une température supérieure à celle du corps de montage et on les pose sur la tête de celui-ci de telle sorte qu'elles s'appliquent, par la moitié respectivement correspondante de la bande centrale, sur une moitié respective de la face de conduction électrique de la tête et, par leurs rebords, sur la contre- dépouille respectivement correspondante ; lorsque les deux parties sont ainsi disposées parfaitement face à face au niveau du plan longitudinal moyen de symétrie, on les soude l'une à l'autre puis on laisse refroidir l'ensemble si bien que, en raison de la différence entre les coefficients de dilatation thermique respectifs de l'acier inoxydable et de l'aluminium, la plaque d'usure vient enserrer la tête du corps de montage et se solidariser avec celui-ci par ce seul effet de serrage.

Cependant, la pression exercée par la plaque d'usure en acier inoxydable sur le corps de montage en aluminium reste par la suite étroitement liée à la température et, dans des cas extrêmes de faible température, cette pression peut devenir insuffisante pour retenir la plaque d'usure à l'encontre d'une translation longitudinale sur le corps de montage et pour assurer une qualité convenable à la conduction électrique entre les deux composants du rail.

On connaît également, de par la demande de brevet français FR-A-2 227 148, un mode de mise en oeuvre de procédé indiqué en préambule, comportant une succession d'étapes dont la première consiste à préfabriquer séparément
- d'une part le corps de montage en se conformant de telle sorte que la tête soit divisée suivant ledit plan en deux moitiés raccordées mutuellement par la base et délimitant par ailleurs entre elles une fente longitudinale ouverte dans le sens d'un éloignement par rapport à la base suivant ladite direction, chacune des deux moitiés présentant à l'opposé de la base suivant ladite direction une extrémité libre comportant une moitié respective de la face de conduction électrique du corps et l'une, respective, des contre- dépouilles et étant susceptible de fléchir élastiquement par rapport à la base, notamment dans le sens d'un rapprochement mutuel à partir d'une configuration de repos dans laquelle le corps de montage est préfabriqué et jusqu'à une configuration de fléchissement élastique maximal, les deux moitiés de la face de conduction électrique du corps présentant par rapport audit plan une orientation telle qu'elles s'éloignent de la base dans le sens d'un rapprochement par rapport audit plan dans la configuration de repos et
- d'autre part la plaque d'usure en la conformant de telle sorte que ses rebords définissent entre eux, perpendiculairement audit plan, dans une zone de rapprochement maximal par rapport à celui-ci dans le sens d'un éloignement par rapport à la bande centrale suivant ladite direction, une largeur inférieure à la largeur maximale que la tête présente, perpendiculairement audit plan, entre les moitiés de la face de conduction électrique du corps et les contre- dépouilles, dans la configuration de repos.

La plaque d'usure et le corps de montage sont ainsi réalisés respectivement en une seule pièce, et l'étape suivante consiste à emboîter à force la plaque d'usure, au prix d'un fléchissement élastique de celle-ci dans le sens d'un écartement mutuel de ses rebords, sur la tête du corps de montage, au prix d'un fléchissement élastique des deux moitiés de la tête dans le sens d'un rapprochement mutuel jusqu'à ce qu'elles butent l'une contre l'autre, ce qui définit une configuration de fléchissement élastique maximal dans laquelle la fente est fermée et que les deux moitiés de la tête conservent en fin de fabrication du rail.

Une étape ultime consiste à solidariser définitivement la plaque d'usure avec le corps de montage en clouant, rivant ou soudant les rebords de la plaque d'usure sur la tête du corps de montage.

Ce document préconise de donner aux faces de conduction électrique de la plaque d'usure et du corps des sections transversales en V, respectivement concave et convexe, dans le but qu'une tendance du corps à reprendre élastiquement sa configuration de repos se traduise par une tendance de la plaque d'usure à s'appliquer fermement à plat, par sa face de conduction électrique, sur la face de conduction électrique du corps de montage.

Cependant, l'obtention de cet effet doit présenter de grandes difficultés dans la mesure où le fait que la plaque d'usure soit emboîtée sur la tête du corps de montage avec une précontrainte élastique telle qu'elle l'emporte sur la tendance élastique des deux moitiés de cette tête à s'écarter mutuellement à partir de la position relative qu'elles occupent en fin de fabrication du rail, c'est-à-dire d'une position relative dans laquelle elles butent l'une contre l'autre et dans laquelle la fente qu'elles définissent est fermée, et le fait que les rebords de la plaque d'usure soient solidarisés fermement par clouage, rivetage ou soudage, avec la tête du corps de montage après l'emboîtement semblent plutôt s'y opposer.

Ainsi, par exemple, compte tenu des coefficients de dilatation thermique des matériaux constitutifs de la plaque d'usure et du corps de montage, à savoir respectivement de l'acier inoxydable et de l'aluminium ou un alliage léger, la face de conduction électrique de la plaque d'usure a plutôt tendance à s'écarter de celle du corps d'usure si la température baisse à partir de la température de fabrication, si bien que la pression de contact mutuel peut alors diminuer sensiblement.

Certes, les clous, rivets ou soudures reliant la plaque d'usure au corps de montage s'opposent alors à un coulissement longitudinal relatif, mais la qualité de la conduction électrique entre la plaque d'usure et le corps de montage n'est pas assurée.

En outre, la nécessité de faire fléchir élastiquement la plaque d'usure pour l'emboîter sur la tête du corps de montage puis la maintenir en précontrainte élastique sur celui-ci impose de choisir pour la plaque d'usure un acier inoxydable demi- dur à ressort, particulièrement fragile et coûteux, et limite nécessairement le choix des caractéristiques géométriques que l'on peut donner à la plaque d'usure ; en particulier, celle-ci doit être relativement fine, ce qui limite sa durée de vie.

De plus, la section transversale convexe que présente alors nécessairement la face de contact de la plaque d'usure avec l'organe de captation d'électricité porté par le mobile oblige à donner à cet organe une forme concave, de section transversale complémentaire de cette section transversale convexe, ce qui complique la réalisation de l'organe de captation et interdit tout décalage transversal entre ce dernier et le rail, c'est-à-dire complique le montage de l'organe de captation sur le mobile dont la trajectoire effective est rarement rigoureusement parallèle au rail.

Le but de la présente invention est de remédier à ces inconvénients de l'Art antérieur et, à cet effet, la présente invention propose un procédé de fabrication d'un rail du type indiqué en préambule, comportant une succession d'étapes dont la première consiste à
a) préfabriquer séparément
   - d'une part le corps de montage en le conformant de telle sorte que la tête soit divisée suivant ledit plan en deux moitiés raccordées mutuellement par la base et délimitant par ailleurs entre elles une fente longitudinale ouverte dans le sens d'un éloignement par rapport à la base suivant ladite direction, chacune des deux moitiés présentant à l'opposé de la base suivant ladite direction une extrémité libre comportant une moitié respective de la face de conduction électrique du corps et l'une, respective, des contre-dépouilles et étant susceptible de fléchir élastiquement par rapport à la base, notamment dans le sens d'un rapprochement mutuel à partir d'une configuration de repos dans laquelle le corps de montage est préfabriqué et jusqu'à une configuration de fléchissement élastique maximal, les deux moitiés de la face de conduction électrique du corps présentant par rapport audit plan une orientation telle qu'elles s'éloignent de la base dans le sens d'un rapprochement par rapport audit plan dans la configuration de repos, et
   - d'autre part la plaque d'usure en la conformant de telle sorte que ses rebords définissent entre eux, perpendiculairement audit plan, dans une zone de rapprochement maximal par rapport à celui-ci dans le sens d'un éloignement par rapport à la bande centrale suivant ladite direction, une largeur inférieure à la largeur maximale que la tête présente, perpendiculairement audit plan, entre les moitiés de la face de conduction électrique d'un corps et les contre- dépouilles, dans la configuration de repos.
   comme le propose FR-A-2 227 148,
   ce procédé étant caractérisé en ce que, lors de l'étape a), on préfabrique séparément
   - le corps de montage en le conformant de telle sorte que les deux moitiés de la face de conduction électrique du corps présentent par rapport audit plan une orientation telles qu'elles se rapprochent de la base dans le sens d'un rapprochement par rapport audit plan dans la configuration de fléchissement élastique maximal et que, dans une configuration intermédiaire déterminée de fléchissement élastique, dans laquelle ladite fente est encore ouverte dans le sens d'un éloignement par rapport à la base suivant ladite direction, elles soient mutuellement coplanaires et perpendiculaires audit plan pour constituer alors ensemble la face de conduction électrique du corps, plane et perpendiculaire audit plan, et
   - d'autre part la plaque d'usure en la conformant définitivement de telle sorte que ladite face de contact pour le mobile et ladite face de conduction électrique de la bande centrale soient planes et perpendiculaires audit plan et que ses rebords définissent entre eux, perpendiculairement audit plan, dans une zone de rapprochement maximal par rapport à celui-ci dans le sens d'un éloignement par rapport à la bande centrale suivant ladite direction, une largeur inférieure à la largeur maximale que la tête présente, perpendiculairement audit plan, entre les moitiés de la face de conduction électrique du corps et les contre- dépouilles, non seulement dans la configuration de repos mais également dans la configuration intermédiaire déterminée, mais au moins égale, notamment inférieure, à la largeur maximale que la tête présente, perpendiculairement audit plan, entre les moitiés de la face de conduction électrique du corps et les contre- dépouilles, dans la configuration de fléchissement élastique maximal, et au moins égale, notamment supérieure, à la largeur minimale que la tête présente, perpendiculairement audit plan, au niveau des contre- dépouilles dans la configuration intermédiaire déterminée, et de telle sorte que les faces d'accrochage définissent avec ladite face de conduction électrique de la plaque d'usure une forme complémentaire de la forme que lesdites contre- dépouilles définissent avec la face de conduction électrique du corps dans ladite configuration intermédiaire déterminée,
   et en ce qu'il comporte, après l'étape a), la succession des étapes consistant à:
b) appliquer aux deux moitiés de la tête des poussées antagonistes de rapprochement mutuel, perpendiculairement audit plan, pour les amener de la configuration de repos à la configuration de fléchissement élastique maximal,
c) en maintenant lesdites poussées pour retenir les deux moitiés de la tête dans la configuration de fléchissement élastique maximal, emboîter la plaque d'usure sur la tête pour placer la face de conduction électrique de la plaque d'usure en appui sur les moitiés de la face de conduction électrique du corps et pour placer les rebords respectivement de part et d'autre de la tête, en regard des contre- dépouilles,
d) relâcher lesdites poussées en maintenant la face de conduction électrique de la plaque d'usure en appui sur les moitiés de la face de conduction électrique du corps, de telle sorte que les deux moitiés de la tête fléchissent élastiquement dans le sens d'un éloignement mutuel, perpendiculairement audit plan, et viennent buter dans ce sens, par le contre- dépouilles, contre les faces d'accrochage des rebords de la plaque d'usure, qui retiennent les deux moitiés de la tête en précontrainte de fléchissement élastique dans ladite configuration intermédiaire déterminée dans laquelle, en outre, les deux moitiés de la face de conduction électrique du corps sont mutuellement coplanaires si bien que la face de conduction électrique de la plaque d'usure s'y applique à plat.

Un Homme du Métier comprendra aisément que, dans un tel cas, la pression exercée par les deux moitiés de la tête du corps de montage, avantageusement préfabriqué en monobloc, lors de l'étape a, dans un matériau choisi dans un groupe comportant l'aluminium et ses alliages, sur la plaque d'usure, avantageusement également réalisée en monobloc, lors de l'étape a, dans un matériau choisi dans un groupe comportant l'acier inoxydable et le cuivre et ses alliages, dépend pratiquement uniquement des propriétés élastiques du matériau constitutif du corps de montage et de la flèche appliquée aux moitiés de la tête dans ladite configuration intermédiaire de fléchissement en comparaison avec la configuration de repos. Cette pression constitue donc pratiquement une constante indépendante de la température ou, en tout cas, peut être suffisamment élevée pour que les variations qui peuvent résulter d'une différence de dilatation thermique restent comparativement suffisamment faibles pour que l'on soit assuré de ce que cette pression conserve en toutes circonstances une valeur suffisante pour empêcher la translation de la plaque d'usure par rapport au corps de montage et pour préserver une bonne conduction électrique entre le corps de montage et la plaque d'usure.

En outre, en comparaison avec la technique antérieure précitée, la réalisation d'un rail par le procédé selon l'invention est plus rapide, moins coûteuse et plus fiable.

En particulier, en comparaison avec la technique de la Société BRECKNELL WILLIS, il n'est pas nécessaire de procéder à une soudure de plusieurs parties initialement distinctes de la plaque d'usure, ce qui permet de se dispenser d'une part du matériel nécessaire à cette soudure et d'autre part des étapes de reprise nécessaires à l'obtention d'une planéité et d'un état de surface convenable de la face de contact de la plaque d'usure avec le mobile. En outre, alors que l'usinage de la soudure, en pratique par fraisage, fait généralement apparaître dans cette face de contact une dépression longitudinale médiane, génératrice d'usure accélérée pour l'organe de captation d'électricité porté par le mobile, lorsqu'on met en oeuvre la technique de la Société BRECKNELL WILLIS, la possibilité de réaliser la plaque d'usure en une seule pièce lorsqu'on met en oeuvre le procédé selon l'invention permet de donner à sa face de contact avec le mobile une planéité sans discontinuité en direction transversale, entraînant une usure moindre pour l'organe de captation d'électricité porté par celui-ci.

En comparaison avec la technique décrite dans FR-A-2 227 148, il n'est pas nécessaire de faire appel à une élasticité de la plaque d'usure dont au contraire, la section transversale peut être considérée comme indéformable en comparaison avec celle du corps de montage, ce qui laisse une plus grande latitude quant au choix de l'acier utilisé, qui peut donc être choisi moins fragile et moins coûteux que de l'acier à ressort, et quant au choix de l'épaisseur de cette plaque, qui peut donc être suffisamment épaisse pour présenter une durée de vie satisfaisante.

En outre, seules l'élasticité du corps de montage et les conformations respectives de la tête de celui-ci et de la plaque d'usure assurent la retenue de la plaque d'usure sur la tête, ce qui permet de se dispenser de toute autre solidarisation mutuelle par clouage, rivetage ou soudage ainsi que des opérations de reprise et du matériel nécessaires à cet effet.

De plus, en comparaison avec la technique décrite dans FR-A-2 227 148, le procédé selon l'invention permet de bénéficier, pour la face de contact de la plaque d'usure avec le mobile, d'une planéité permettant de simplifier la réalisation et le montage de l'organe de captation d'électricité porté par le mobile même si le déplacement longitudinal de ce dernier s'accompagne d'un certain débattement transversal par rapport au rail.

Naturellement, de façon connue en elle-même, la conduction électrique entre la tête du corps de montage et la plaque d'usure peut être améliorée et tout risque de pénétration d'un électrolyte entre eux être évité par application d'une graisse de contact au moins sur l'une desdites faces de conduction électrique et, de préférence, sur les contre- dépouilles et/ou les faces d'accrochage avant l'étape c. Cette application est de préférence immédiatement précédée ou accompagnée d'un brossage de nettoyage ; en particulier, lorsque le corps de montage est réalisé en aluminium ou en alliage d'aluminium, l'application d'un tel brossage à la face de conduction électrique de ce corps et, de préférence, aux contre- dépouilles permet d'en éliminer l'alumine qui nuirait à la conduction électrique avec la plaque d'usure et dont la graisse de contact, neutre, appliquée immédiatement empêche ensuite la re- formation.

Le procédé de fabrication selon l'invention peut être mis en oeuvre simultanément sur la totalité de la dimension longitudinale du corps de montage et de la plaque d'usure, ou encore successivement dans des zones longitudinalement localisées du corps de montage et de la plaque d'usure, se succédant longitudinalement dans un sens longitudinal déterminé. En outre, il peut être mis en oeuvre intégralement en atelier, ou encore partiellement en atelier et partiellement sur un site d'utilisation du rail.

Ainsi, selon un mode de mise en oeuvre de ce procédé, on fixe le corps de montage au support, dans une position déterminée d'utilisation, sur un site d'utilisation du rail entre les étapes a et b et on met en oeuvre les étapes b, c, d en laissant le corps de montage fixé au support, dans ladite position déterminée, sur le site.

Lors de la réalisation d'une file de rails selon l'invention selon ce mode de mise en oeuvre, on peut faire coïncider chaque jonction entre les plaques d'usure correspondant à deux rails longitudinalement voisins avec la jonction entre les corps de montage correspondants, mais on préfère utiliser les plaques d'usure pour assurer une continuité mécanique entre les rails et les corps de montage pour assurer un alignement entre les plaques d'usure. Un mode particulier de mise en oeuvre du procédé selon l'invention, à cet effet, se caractérise en ce que l'on fixe plusieurs exemplaires du corps de montage au support, dans ladite position déterminée, sur le site, entre les étapes a et b, en plaçant lesdits exemplaires dans le prolongement l'un de l'autre en direction longitudinale, et en ce que l'on met en oeuvre les étapes b, c, d en laissant lesdits exemplaires fixés au support, dans ladite position déterminée, sur le site, au moyen de plusieurs exemplaires de ladite plaque d'usure, que l'on place dans le prolongement l'un de l'autre en direction longitudinale en décalant longitudinalement leurs jonctions mutuelles par rapport aux jonctions mutuelles desdits exemplaires du corps de montage.

Dans la mesure où la mise en oeuvre du procédé selon l'invention implique la préfabrication d'un corps de montage et d'une plaque d'usure de conformation respective spécifique, la présente invention s'étend également à un tel corps de montage et à une telle plaque d'usure, tels qu'obtenus respectivement par mise en oeuvre de l'étape a.

A cet égard, le corps longitudinal, électriquement conducteur, selon l'invention, présentant une section transversale sensiblement constante et un plan longitudinal moyen de symétrie et comportant, dans des positions mutuellement opposées suivant une direction transversale dudit plan, d'une part une base longitudinale rigide de montage sur le support et d'autre part une tête longitudinale de réception d'une plaque d'usure, laquelle tête présente une contre- dépouille dans le sens d'un éloignement par rapport audit plan, respectivement de part et d'autre ce celui-ci, et est divisée suivant ledit plan en deux moitiés raccordées mutuellement par la base et délimitant par ailleurs entre elles une fente longitudinale ouverte dans le sens d'un éloignement par rapport à la base suivant ladite direction, chacune des deux moitiés présentant à l'opposé de la base suivant ladite direction une extrémité libre comportant une face extrême plane et l'une, respective, des contre- dépouilles et étant susceptible de fléchir élastiquement par rapport à la base, notamment dans le sens d'un rapprochement mutuel à partir d'une configuration de repos dans laquelle le corps de montage est préfabriqué et jusqu'à une configuration de fléchissement élastique maximal, les deux faces extrêmes présentant par rapport audit plan une orientation telle qu'elles s'éloignent de la base dans le sens d'un rapprochement par rapport audit plan dans la configuration de repos, comme le propose FR-A-2 227 148, est caractérisé en ce que les deux faces extrêmes présentent par rapport audit plan une orientation telle qu'elles se rapprochent de la base dans le sens d'un rapprochement par rapport audit plan dans la configuration de fléchissement élastique maximal et que, dans une configuration intermédiaire déterminée de fléchissement élastique, dans laquelle ladite fente est encore ouverte dans le sens d'un éloignement par rapport à la base suivant ladite direction, elles soient mutuellement coplanaires et perpendiculaires audit plan pour former ensemble une face plane délimitant la tête dans le sens d'un éloignement par rapport à la base, suivant ladite direction, entre les contre- dépouilles.

On peut concevoir que ce corps soit réalisé par assemblage solidaire de plusieurs pièces mais, de préférence, il est réalisé en monobloc dans un matériau choisi dans un groupe comportant l'aluminium et ses alliages.

Outre les avantages de gain de poids, de bonne conduction électrique et de bonne conduction thermique qu'ils offrent déjà dans les modes de réalisation antérieurement connus des rails du type indiqué en préambule, en comparaison avec des rails tout- acier, l'aluminium et ses alliages offrent des avantages spécifiques à la mise en oeuvre de la présente invention en offrant des possibilités étendues dans le choix de la forme et des dimensions de la section transversale du corps de montage, dans le but de conjuguer au mieux la flexibilité élastique requise par la mise en oeuvre de la présente invention avec l'obtention d'une pression de contact satisfaisante entre les deux moitiés de la tête du corps de montage et la plaque d'usure, en termes de liaison mécanique mutuelle et de conduction électrique entre eux, ainsi que dans le choix de la composition de l'alliage dans le même but, pour une forme et des dimensions données de la section transversale du corps de montage, c'est-à-dire en conservant une même filière pour réaliser celui-ci par extrusion.

Le corps ainsi conçu peut présenter en outre diverses caractéristiques optionnelles permettant de faciliter la mise en oeuvre des étapes b, c et d du procédé ou d'en améliorer le résultat.

Ainsi, selon un mode de réalisation préféré, chaque moitié de la tête comporte, dans le sens d'un éloignement par rapport à la base suivant ladite direction, une partie extrême rigide groupant notamment ladite face extrême respective et ladite contre- dépouille respective, et, entre ladite partie extrême rigide et la base, une partie intermédiaire de raccordement de ladite partie extrême à la base, ladite partie intermédiaire définissant en comparaison avec la base et ladite partie extrême une zone affaiblie de fléchissement élastique privilégié de la moitié respective de la tête entre la configuration de repos et la configuration de fléchissement élastique maximal.

On est ainsi assuré de ce que, dans ladite configuration intermédiaire prédéterminée, la tête présente extérieurement une géométrie parfaitement définie, étroitement complémentaire de la géométrie que la plaque d'usure présente intérieurement, ce qui permet d'obtenir une application mutuelle aussi ferme et aussi uniformément répartie que possible, tout en disposant d'une possibilité de choisir l'élasticité de chaque moitié de la tête en flexion, laquelle conditionne la pression que chaque moitié de la tête applique au rebord respectivement associé de la plaque d'usure dans ladite configuration intermédiaire déterminée de fléchissement élastique, c'est-à-dire après fabrication du rail notamment par le procédé selon l'invention.

A cet effet, également, on prévoit de préférence que chaque contre- dépouille soit plus éloignée de la base, suivant ladite direction, que le raccordement entre ladite partie extrême rigide respective et ladite partie intermédiaire élastiquement flexible respective.

Notamment pour augmenter la section transversale du corps de montage en dépit de l'aménagement des zones affaiblies de fléchissement élastique privilégié, présentant nécessairement une certaine finesse, c'est-à-dire afin de répondre aux besoins en passage de courant, chaque partie extrême rigide présente de préférence un prolongement vers la base suivant ladite direction, longeant la partie intermédiaire élastiquement flexible respective dans le sens d'un éloignement par rapport audit plan en formant avec elle une fente longitudinale respective ouverte vers la base suivant ladite direction, notamment afin de ne pas entraver le fléchissement des moitiés de la tête.

Ce prolongement de chaque partie extrême rigide est de préférence conformé de façon à permettre l'accrochage d'un capot isolant de forme traditionnelle sur la base du corps de montage.

En outre, lorsque, de façon préférée afin de faciliter la mise en oeuvre des étapes b et c du procédé, on prévoit que chaque moitié de la tête présente dans le sens d'un éloignement par rapport audit plan, plus près de la base que la contre- dépouille respective, un méplat respectif, approximativement parallèle audit plan, pour l'application d'une poussée respective vers celui-ci afin d'amener ladite moitié de la configuration de repos à la configuration de fléchissement maximal, ce méplat est avantageusement aménagé sur le prolongement respectif et plus proche de la base, suivant ladite direction, que le raccordement entre la partie extrême rigide respective et la partie intermédiaire élastiquement flexible respective.

Avantageusement, le méplat précité est placé en saillie, dans le sens d'un éloignement par rapport audit plan, par rapport aux zones avoisinantes du corps, ce qui permet d'éviter tout risque d'interférence, avec ces dernières, des moyens utilisés pour appliquer ladite poussée.

Naturellement, il est important que, lors des étapes b et c, la poussée appliquée aux deux moitiés de la tête dans le sens d'un rapprochement mutuel ne se traduise pas par une déformation plastique des moitiés de la tête et, à cet effet, de préférence, chaque moitié de la tête comporte, dans la zone de ladite fente la plus éloignée de la base suivant ladite direction, une zone de butée contre l'autre moitié de la tête dans la configuration de fléchissement maximal.

Afin, d'une part, d'offrir un appui réparti aux faces d'accrochage des rebords de la plaque d'usure et, d'autre part, de traduire le fléchissement élastique des moitiés de la tête en retour vers la configuration de repos, en pratique seulement jusqu'à la configuration intermédiaire déterminée, lors de l'étape d du procédé, par une application ferme de la face de conduction électrique de la bande centrale de la plaque d'usure sur la face de conduction électrique de la tête, chaque contre- dépouille est avantageusement formée par un pan plan tourné dans le sens d'un éloignement par rapport audit plan et se rapprochant progressivement de celui-ci dans le sens d'un rapprochement par rapport à la base suivant ladite direction, au moins dans ladite configuration intermédiaire déterminée. Les deux contre- dépouilles appliquent ainsi aux rebords de la plaque d'usure une sorte d'effet de came qui a pour conséquence que, au fur et à mesure que la tête s'élargit par fléchissement élastique de ses deux moitiés dans le sens d'un éloignement mutuel perpendiculairement au plan moyen, de façon symétrique par rapport à ce plan par raison de symétrie, les contre-dépouilles appliquent à la plaque d'usure, par l'intermédiaire des rebords de celle-ci, une traction vers la base suivant ladite direction, et il en résulte une application mutuelle des deux faces de conduction électrique l'une sur l'autre de façon aussi uniforme, à plat, que possible, de façon à réduire à un minimum les risques de "piqûre" de ces faces par effet d'arc entre elles.

Cet effet de came se conserve du fait de la précontrainte élastique de la tête du corps de montage et de l'ouverture de la fente de celle-ci en fin de fabrication du rail quelles que soient les variations dimensionnelles que la plaque d'usure et le corps de montage peuvent subir par dilatation thermique lorsque le rail est en service si bien que, à chaque instant, les deux faces de conduction électrique restent fermement appliquées l'une contre l'autre, aussi uniformément et à plat que possible, dans des conditions optimales de conduction électrique entre elles.

De préférence, lors de l'étape a, on dimensionne les contre-dépouilles et les rebords de la plaque d'usure, suivant ladite direction, de telle sorte que la partie de chaque contre- dépouille qui est la plus éloignée de la face de conduction électrique du corps suivant ladite direction reste dégagée du rebord respectivement correspondant à la fin de l'étape d, si bien qu'aucun obstacle n'entrave cet effet.

En outre, pour faciliter la mise en place de la plaque d'usure sur la tête du corps de montage lors de l'étape c, on prévoit avantageusement que chaque moitié de la tête comporte, entre la face extrême respective et la contre- dépouille respective, une facette extrême tournée dans le sens d'un éloignement par rapport audit plan, raccordant la force extrême respective et la contre- dépouille respective et se rapprochant progressivement dudit plan dans le sens d'un éloignement par rapport à la base suivant ladite direction, notamment dans la configuration de fléchissement maximal. Dans cette configuration, ces facettes constituent un biseau, respectivement de part et d'autre de l'ensemble formé par les faces extrêmes des moitiés de la tête, pour guider les rebords de la plaque d'usure au fur et à mesure que l'on engage celle-ci sur la tête, dans le sens d'un rapprochement par rapport à la base du corps suivant ladite direction.

Pour constituer la plaque d'usure du rail notamment lorsqu'on réalise celui-ci par mise en oeuvre du procédé selon l'invention, celle-ci propose une plaque longitudinale, électriquement conductrice, présentant une section transversale sensiblement constante et un plan longitudinal moyen de symétrie et comportant une bande centrale plate chevauchant ledit plan, présentant deux faces mutuellement opposées, et deux rebords latéraux situés respectivement de part et d'autre dudit plan et placés en saillie sur la même desdites faces, présentant vers ledit plan une face qui se rapproche de celui-ci dans le sens d'un éloignement par rapport à la bande centrale suivant une direction transversale dudit plan pour définir une forme en crochet, comme le propose FR-A-2 227 418,
cette plaque d'usure étant caractérisée en ce que lesdites faces de sa bande centrale sont planes et perpendiculaires audit plan.

On peut concevoir que cette plaque soit réalisée par assemblage solidaire de plusieurs pièces, mais on préfère la réaliser en monobloc, dans un matériau choisi dans un groupe comportant l'acier inoxydable et le cuivre et ses alliages.

Pour coopérer avec les contre- dépouilles de la tête lorsque celles-ci sont planes, lesdites faces des rebords, constituant les faces d'accrochage, sont de préférence planes, ce qui permet leur application à plat sur les contre- dépouilles de la tête dans ladite configuration intermédiaire déterminée de fléchissement élastique, c'est-à-dire une fois l'assemblage de la plaque d'usure avec le corps de montage réalisé, et favorise ainsi une conduction électrique à ce niveau.

A cet effet, selon un mode de mise en oeuvre préféré de l'étape a du procédé selon l'invention, on préfabrique le corps de montage et la plaque d'usure de telle sorte que les contre- dépouilles et les faces d'accrochage soient planes et forment un même angle respectivement par rapport à la moitié correspondante de la face de conduction électrique du corps et par rapport à la face de conduction électrique de la bande centrale si bien qu'à la fin de l'étape d, les contre- dépouilles et les faces d'accrochage sont en appui mutuel à plat.

Avantageusement, selon une configuration particulièrement simple, chaque rebord présente un bord libre rectiligne, longitudinal, délimitant ladite face respective ou face d'accrochage dans le sens d'un éloignement par rapport à la bande centrale suivant ladite direction et, de façon encore préférée, chaque rebord est plat et raccordé à la bande centrale par un pli longitudinal respectif

Dans la mesure où la mise en oeuvre du procédé selon l'invention communique au rail obtenu, de type indiqué au préambule, une structure en elle-même originale, la présente invention s'étend également à un rail longitudinal d'alimentation électrique de ce type, susceptible d'être réalisé par mise en oeuvre du procédé selon l'invention mais le cas échéant également par un autre procédé, ce rail appartenant au type comportant deux composants longitudinaux mutuellement solidaires, électriquement conducteurs, présentant des sections transversales respectives sensiblement constantes et un plan longitudinal moyen de symétrie commun, à savoir un corps de montage sur un support et une plaque d'usure par le mobile,
- le corps de montage présentant, dans des positions mutuellement opposées suivant une direction transversale dudit plan, d'une part une base longitudinale rigide de montage sur la support et d'autre part une tête longitudinale de réception de la plaque d'usure, laquelle tête est délimitée dans le sens d'un éloignement par rapport à la base, suivant ladite direction, par une face de conduction électrique, chevauchant ledit plan, et présente une contre- dépouille dans le sens d'un éloignement par rapport audit plan, respectivement de part et d'autre de la face de conduction électrique, la tête du corps de montage étant divisée suivant ledit plan en deux moitiés raccordées mutuellement par la base et délimitant par ailleurs entre elles une fente longitudinale, chacune des deux moitiés présentant à l'opposé de la base suivant ladite direction une extrémité libre comportant une moitié respective de la face de conduction électrique du corps et l'une, respective, des contre- dépouilles,
- la plaque d'usure comportant d'une part une bande centrale plate de transmission d'électricité au mobile, chevauchant ledit plan et perpendiculaire à celui-ci, présentant à l'opposé de la base suivant ladite direction une face de contact pour le mobile et vers la base suivant ladite direction une face de conduction électrique, en appui à plat sur la face de conduction électrique du corps, et d'autre part deux rebords latéraux disposés respectivement de part et d'autre dudit plan et formant une saillie vers la base, suivant ladite direction, par rapport à la bande centrale, chacun des rebords présentant vers ledit plan une face d'accrochage sur le corps, laquelle face d'accrochage se rapproche dudit plan dans le sens d'un éloignement par rapport à la bande centrale suivant ladite direction pour définir une forme en crochet en prise avec l'une, respective, des contre- dépouilles de telle sorte que la plaque d'usure soit retenue solidairement sur la tête du corps de montage par effet d'emboîtement mutuel et que lesdites moitiés de la tête soient retenues dans une configuration déterminée de précontrainte de fléchissement élastique par appui des contre-dépouilles contre les faces d'accrochage de la plaque d'usure dans le sens d'un éloignement par rapport audit plan, comme le propose FR-A-2 227 148,
ce rail étant caractérisé en ce que le corps de montage et la plaque d'usure présentent l'une quelconque des caractéristiques précitées, conformes aux aspects respectivement correspondants de l'invention, et en ce que la face de conduction électrique du corps de montage est plane et perpendiculaire audit plan de même que la face de conduction électrique de la plaque d'usure, et ladite fente longitudinale est ouverte dans le sens d'un éloignement par rapport à la base suivant ladite direction, dans ladite configuration déterminée de précontrainte de fléchissement élastique, dans laquelle lesdites moitiés de la tête sont retenues par appui des contre-dépouilles contre les faces d'accrochage de la plaque d'usure dans le sens d'un éloignement par rapport audit plan.

Naturellement, lorsqu'un tel rail est fabriqué au moyen du procédé selon l'invention, cette configuration déterminée de précontrainte de fléchissement élastique est la configuration intermédiaire déterminée, précitée, de fléchissement élastique.

Ce rail peut présenter en outre toutes les caractéristiques résultant soit de la mise en oeuvre du procédé selon l'invention dans ses différentes variantes, soit de la configuration du corps de montage et de la plaque d'usure selon l'invention, en fonction des variantes ci-dessus de réalisation de ces derniers.

En particulier, une graisse de contact est avantageusement intercalée au moins entre lesdites faces de conduction électrique et, de préférence, entre les contre- dépouilles et les faces d'accrochage ; en outre, avantageusement, les contre- dépouilles et les faces d'accrochage sont planes, se rapprochent dudit plan dans le sens d'un rapprochement par rapport à la base suivant ladite direction et sont en appui mutuel à plat.

En conséquence d'une fabrication par le procédé selon l'invention, d'une part, et de façon particulièrement avantageuse pour permettre le remplacement d'une plaque d'usure usée ou endommagée sans être obligé de changer également le corps, d'autre part, chaque moitié de la tête est avantageusement susceptible de fléchir élastiquement par rapport à la base, dans le sens d'un rapprochement par rapport audit plan, jusqu'à une configuration de fléchissement élastique maximal dans laquelle la dimension maximale que la tête présente, perpendiculairement audit plan, entre les moitiés de la face de conduction électrique du corps et les contre- dépouilles, est au plus égale à la largeur que les rebords définissent entre eux, perpendiculairement audit plan, dans une zone de rapprochement maximal par rapport à celui-ci dans le sens d'un éloignement par rapport à la bande centrale suivant ladite direction.

Ainsi, en ramenant la tête à sa configuration de fléchissement élastique maximal, on peut en démonter la plaque d'usure, en placer une nouvelle et laisser revenir la tête vers sa configuration de repos, en pratique jusqu'à ce que ses deux moitiés viennent en butée contre les rebords de la nouvelle plaque d'usure, à nouveau dans la configuration intermédiaire déterminée.

Cette opération peut s'effectuer en atelier, après démontage du rail vis-à-vis de son support sur son site d'utilisation et avant un remontage du rail sur son support, mais elle s'effectue de préférence sur site.

A cet effet, la présente invention propose un procédé de rénovation d'un rail dont le corps de montage, offrant une telle possibilité de fléchissement élastique des moitiés de sa tête par rapport à sa base, est fixé à un support dans une position déterminée d'utilisation, sur un site d'utilisation du rail, et dont la plaque d'usure est usée ou endommagée, caractérisé en ce que l'on met en oeuvre sur ledit site, en laissant le corps de montage fixé au support, dans ladite position déterminée, la succession des étapes consistant à:
e) appliquer aux deux moitiés de la tête des poussées antagonistes de rapprochement mutuel, perpendiculairement audit plan, pour les amener de la configuration déterminée de précontrainte de fléchissement élastique à la configuration de fléchissement élastique maximal,
f) en maintenant lesdites poussées pour retenir les deux moitiés de la tête dans la configuration de fléchissement élastique maximal, déboîter la plaque d'usure de la tête pour la séparer du corps de montage,
g) en maintenant lesdites poussées pour retenir les deux moitiés de la tête dans la configuration de fléchissement élastique maximal, emboîter une nouvelle plaque d'usure sur la tête pour placer la face de conduction électrique de la nouvelle plaque d'usure en appui sur les moitiés de la face de conduction électrique du corps et pour placer les rebords respectivement de part et d'autre de la tête, en regard des contre-dépouilles,
h) relâcher lesdites poussées en maintenant la face de conduction électrique de la nouvelle plaque d'usure en appui sur les moitiés de la face de conduction électrique du corps, de telle sorte que les deux moitiés de la tête fléchissent élastiquement dans le sens d'un éloignement mutuel, perpendiculairement audit plan, et viennent buter dans ce sens, par les contre- dépouilles, contre les faces d'accrochage des rebords de la nouvelle plaque d'usure, qui retiennent les deux moitiés de la tête en précontrainte de fléchissement élastique dans ladite configuration déterminée dans laquelle, en outre, les deux moitiés de la face de conduction électrique du corps sont mutuellement coplanaires si bien que la face de conduction électrique de la nouvelle plaque d'usure s'y applique à plat.

Dans une variante, entre les étapes f et g, on peut mettre en oeuvre la succession des étapes consistant à :
i) relâcher lesdites poussées de telle sorte que les deux moitiés de la tête fléchissent élastiquement dans le sens d'un éloignement mutuel, perpendiculairement audit plan, et viennent à une configuration de repos,
j) appliquer à nouveau lesdites poussées aux deux moitiés de la tête pour les amener de la configuration de repos à la configuration de fléchissement élastique maximal.

Naturellement, pour éviter une déformation plastique, au moins en partie irréversible, du corps de montage lors de l'application de la poussée destinée à le ramener à sa configuration de fléchissement élastique maximal, chaque moitié de la tête comporte de préférence, dans la zone de ladite fente la plus éloignée de la base suivant ladite direction, une zone de butée contre l'autre moitié de la tête dans la configuration de fléchissement élastique maximal.

En outre, pour faciliter l'application de ladite poussée, chaque moitié de la tête présente de préférence, dans le sens d'un éloignement par rapport audit plan, plus prés de la base que le rebord correspondant de la plaque d'usure, un méplat respectif, approximativement parallèle audit plan, pour l'application d'une poussée respective vers celui-ci afin d'amener ladite moitié à la configuration de fléchissement élastique maximal, chaque méplat étant avantageusement placé en saillie, dans le sens d'un éloignement par rapport audit plan, par rapport aux zones avoisinantes respectives du rail, de telle sorte que les moyens utilisés pour appliquer ladite poussée n'interfèrent ni avec la plaque d'usure à changer, ni avec la nouvelle plaque d'usure.

Le procédé de rénovation selon l'invention peut être mis en oeuvre en atelier, après démontage du rail vis-à-vis de son support sur le site d'utilisation et retour en atelier, ce qui nécessite ensuite de réacheminer le rail vers son site d'utilisation pour le remonter sur son support ou, plus fréquemment, de le remplacer immédiatement par un rail neuf ou rénové et de le stocker après rénovation en vue d'un montage sur un nouveau site. On préfère par conséquent le mettre en oeuvre sur le site d'utilisation du rail, dont le corps de montage est fixé à son support dans sa position déterminée d'utilisation, en laissant le corps de montage fixé au support.

En outre, le procédé de rénovation selon l'invention peut être mis en oeuvre simultanément sur la totalité de la dimension longitudinale du rail mais, pour des raisons d'encombrement du matériel utilisé à cet effet lorsque ce procédé est mis en oeuvre sur site, en particulier, on préfère le mettre en oeuvre successivement dans des zones longitudinalement localisées du rail, se succédant longitudinalement dans un sens longitudinal déterminé.

Alors, avantageusement, sur site, on le met en oeuvre sur plusieurs exemplaires du rail, placés dans le prolongement longitudinal l'un de l'autre, en décalant longitudinalement les jonctions mutuelles des exemplaires de la nouvelle plaque d'usure par rapport aux jonctions mutuelles des exemplaires du corps de montage, ce qui permet d'utiliser les plaques d'usure pour assurer une continuité mécanique entre les rails successifs et d'aligner au mieux les plaques d'usure en dépit d'éventuels défauts d'alignement entre les corps de montage pour limiter l'abrasion subie par l'organe de captation, tel qu'un frotteur, au passage d'une plaque d'usure à une autre.

Pour permettre une mise en oeuvre facile des étapes e, f, g, h, et le cas échéant i et j du procédé de rénovation selon l'invention notamment sur site, de même que les étapes b, c, d du procédé de fabrication selon l'invention notamment sur site, la présente invention propose un chariot apte à progresser le long du rail ou du corps de montage en mettant en oeuvre ces étapes au fur et à mesure de sa progression.

A cet effet, ce chariot est caractérisé en ce qu'il comporte:
- un châssis rigide présentant un plan longitudinal moyen de symétrie,
- des moyens de liaison mécanique amovible entre le châssis et le corps de montage dans une orientation dans laquelle ledit plan longitudinal moyen de symétrie coïncide avec le plan longitudinal moyen de symétrie de ce dernier, lesdits moyens assurant d'une part un supportage du châssis par le corps de montage et d'autre part un guidage du châssis à la translation longitudinale par rapport à celui-ci,
- des organes latéraux de poussée disposés respectivement de part et d'autre dudit plan longitudinal et mutuellement symétriques par rapport à celui-ci, à un niveau correspondant à une zone de la tête du corps de montage dégagée par la plaque d'usure lorsque le rail est fabriqué,
- des moyens pour déplacer coercitivement, de façon commandée, les organes latéraux de poussée vers ledit plan et dans le sens d'un éloignement par rapport à celui-ci, perpendiculairement à celui-ci, en conservant leur symétrie mutuelle,
- un organe central de poussée disposé suivant ledit plan,
- des moyens pour déplacer coercitivement, de façon commandée, l'organe central de poussée dans un sens et dans l'autre d'une direction transversale dudit plan.

De préférence, pour faciliter la progression du chariot, les moyens de liaison mécanique sont des moyens de roulement.

De même, à cet effet, les organes latéraux de poussée comportent avantageusement au moins une paire de galets montés à la rotation libre autour d'un axe respectif parallèle à ladite direction dudit plan sur un coulisseau respectif et les moyens pour déplacer les organes latéraux de poussée comportent avantageusement, sur le chariot, des glissières de guidage des coulisseaux suivant une direction perpendiculaire audit plan sans autre possibilité de déplacement relatif et des moyens de positionnement réglable des coulisseaux le long des glissières. De façon particulièrement simple, ces moyens de positionnement réglable des coulisseaux peuvent comporter une vis, avantageusement actionnée manuellement, montée à la rotation sur le châssis autour d'un axe perpendiculaire audit plan et immobilisée par rapport au châssis à l'encontre de tout autre déplacement, ladite vis étant en prise avec l'un et l'autre coulisseaux par des filets de pas opposés.

De préférence, on prévoit deux exemplaires de ladite paire, mutuellement symétriques par rapport à un plan transversal déterminé du chariot, constituant un plan de symétrie pour l'organe central de poussée, auquel cas les moyens pour déplacer les organes latéraux de poussée sont prévus en deux exemplaires respectivement correspondants, mutuellement indépendants.

De façon particulièrement simple et efficace, les galets précités peuvent constituer les moyens de roulement précités. En particulier, lorsque le corps de montage du rail comporte des méplats en saillie par rapport aux zones avoisinantes en vue de recevoir la poussée propre à l'amener à la configuration de fléchissement élastique maximal, chaque galet peut avantageusement présenter une gorge annulaire susceptible de prendre appui sur le corps de montage par un méplat respectif et par des zones situées respectivement de part et d'autre de celui-ci, ce qui assure à la fois le supportage du chariot par le corps de montage dans la position requise et le guidage du chariot, dans cette position, le long du corps de montage ou du rail.

De façon similaire, l'organe central de poussée est de préférence un galet monté à la rotation libre autour d'un axe transversal sur un coulisseau et les moyens pour déplacer l'organe central de poussée comportent avantageusement sur le chariot une glissière de guidage du coulisseau suivant ladite direction transversale sans autre possibilité de déplacement relatif et des moyens de positionnement réglable du coulisseau le long de la glissière. Ces moyens de positionnement réglable peuvent comporter une vis, avantageusement actionnée manuellement, montée à la rotation sur le coulisseau autour d'un axe transversal dudit plan et immobilisée par rapport au coulisseau à l'encontre de tout autre déplacement, ladite vis étant en prise avec le châssis par un filet.

D'autres caractéristiques et avantages de ces différents aspects de la présente invention ressortiront de la description ci-dessous, relative à un exemple non limitatif de mise en oeuvre de cette invention, ainsi que des dessins annexés qui font partie intégrante de cette description.
La figure 1 montre une vue d'une plaque d'usure préfabriquée conformément à la présente invention, en coupe transversale courante, par exemple suivant un plan référencé en I-I à la figure 2.
La figure 2 montre une vue de cette plaque d'usure préfabriquée, en coupe par son plan longitudinal moyen de symétrie repéré en II-II à la figure 1.
La figure 3 montre une vue d'un corps de montage selon l'invention tel qu'il est fabriqué, c'est-à-dire dans sa configuration de repos, en coupe transversale courante par exemple par un plan repéré en III-III à la figure 4.
La figure 4 montre une vue de ce corps de montage en élévation latérale dans un sens repéré en IV à la figure 4.

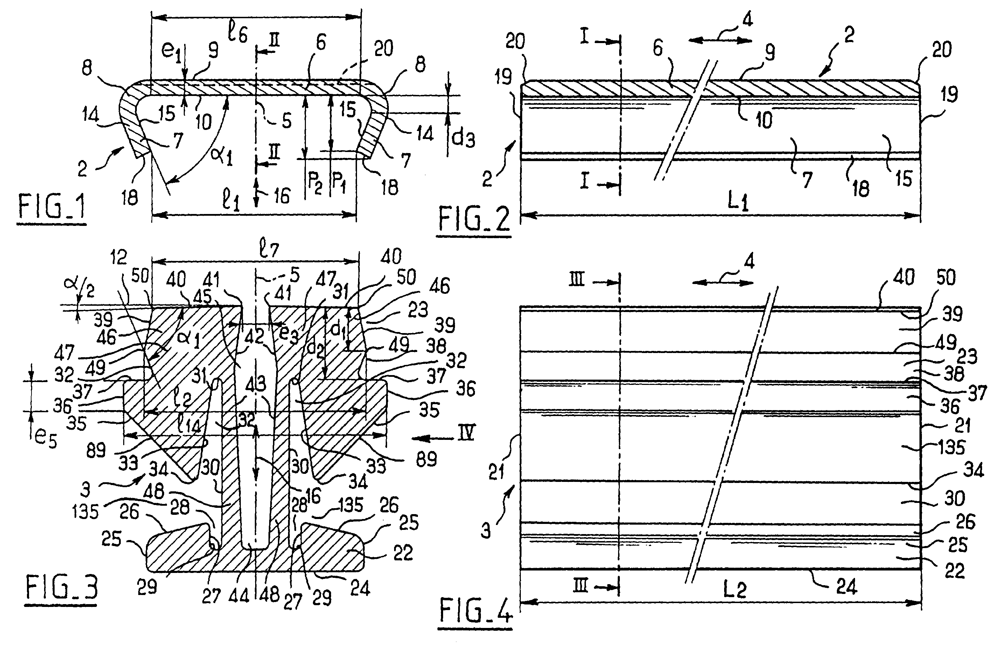

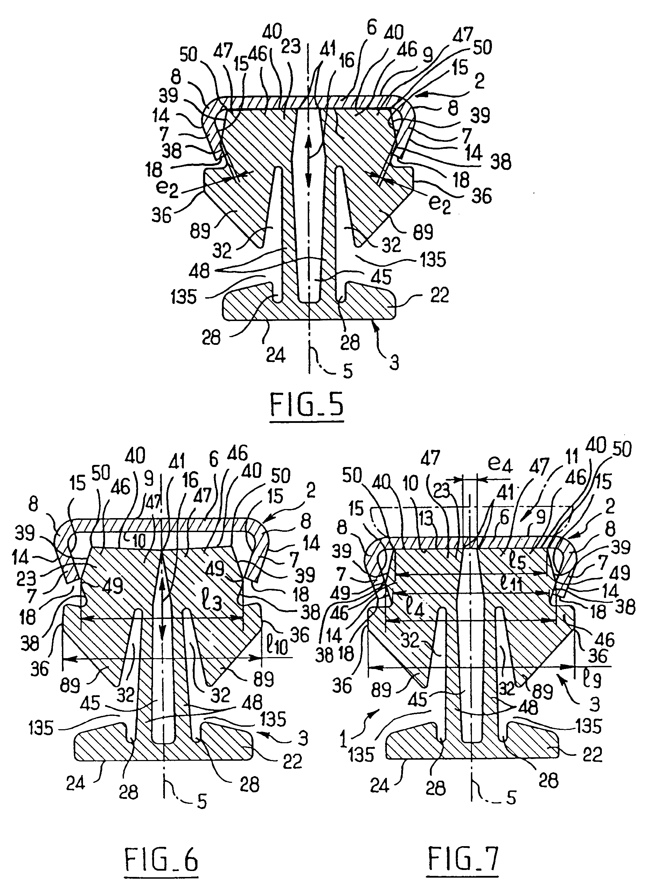

Les figures 5, 6, 7 montrent, par des vues en coupe transversale courante, telles que repérées en I-I à la figure 2 et III-III à la figure 4, respectivement une superposition du profil transversal de la plaque d'usure préfabriquée tel qu'illustré à la figure 1 et du profil transversal du corps de montage occupant sa configuration de repos tel qu'illustré à la figure 3, les profils transversaux comparés de la bande d'usure et du corps de montage occupant sa configuration de fléchissement élastique maximal, dans une position relative transitoire de la mise en place de la plaque d'usure sur le corps de montage, et le rail selon l'invention comportant la plaque d'usure retenue en place sur le corps de montage occupant sa configuration déterminée intermédiaire entre sa configuration de repos et sa configuration de fléchissement élastique maximal.
La figure 8 montre une vue de dessus d'une installation d'assemblage de la plaque d'usure et du corps de montage d'un rail selon l'invention.
Les figures 9 à 14 montrent, par des vues en coupe suivant des plans transversaux repérés respectivement en IX-IX, X-X, XI-XI, XII-XII, XIII-XIII, XIV-XIV à la figure 8, différents postes de travail de cette installation et différentes étapes de réalisation d'un rail selon l'invention qui y sont effectuées.
Les figures 15 et 16 montrent, par des vues correspondant à celles de la figure 14, deux autres étapes successives de la réalisation du rail selon l'invention.
Les figures 17 et 18 montrent des vues en élévation latérale de ce rail en cours de fabrication, illustrant deux exemples de positionnement relatif de la plaque d'usure et du corps de montage en direction longitudinale.
Les figures 19 et 20 montrent encore deux autres étapes successives de la réalisation de ce rail.
La figure 21 montre une vue de ce rail terminé, tel qu'il est acheminé vers le stockage et le colisage.
La figure 22 montre une vue en coupe transversale de plusieurs rails selon l'invention en position relative de colisage, en coupe transversale suivant un plan repéré en XXII-XXII à la figure 8.

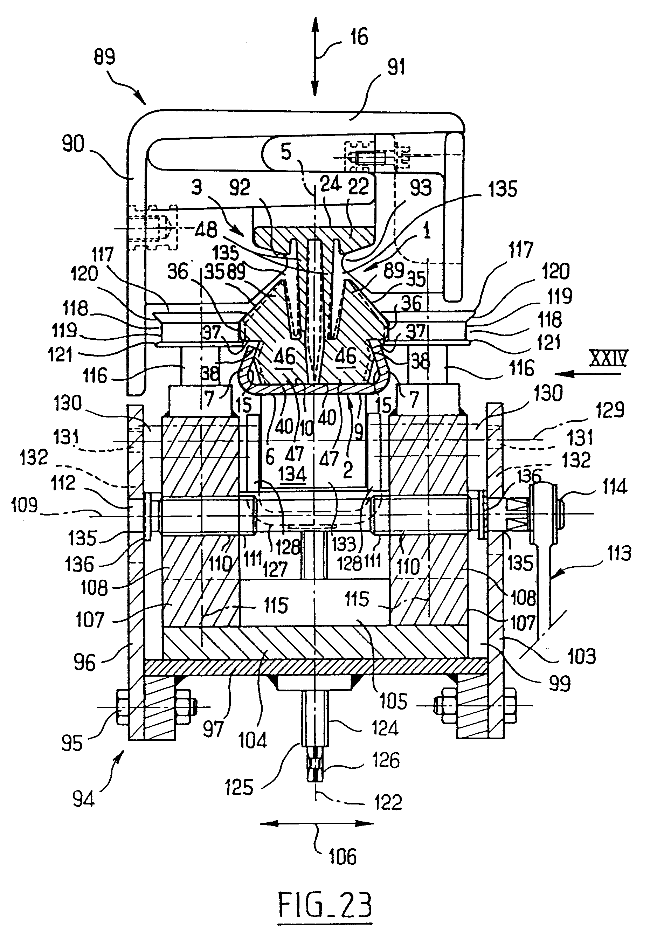

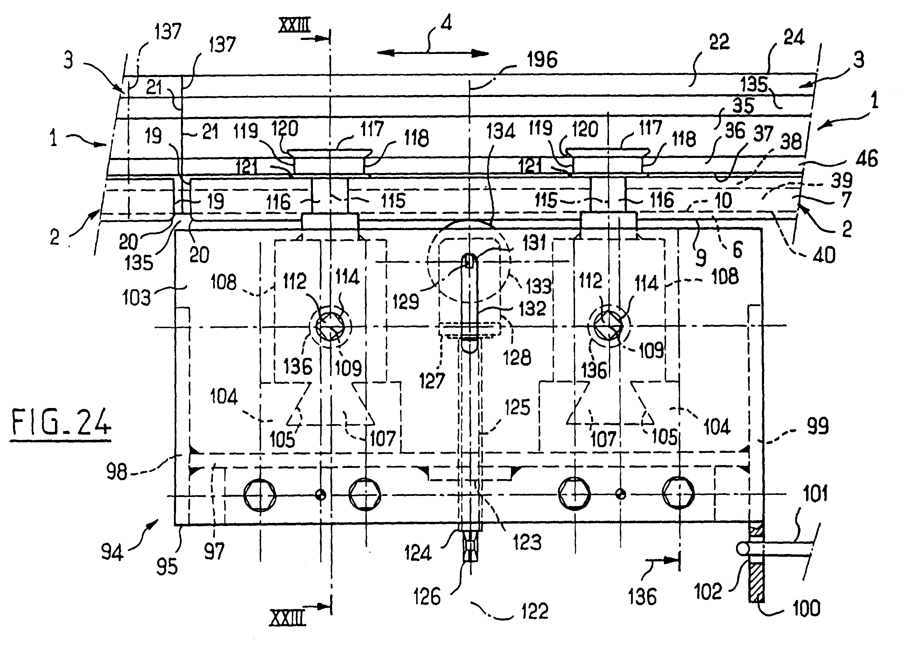

Les figures 23 et 24 montrent un chariot destiné à réaliser l'assemblage de la plaque d'usure au corps de montage déjà monté sur son support sur le site d'utilisation du rail ou le remplacement de la plaque d'usure sans démontage du corps par rapport au support sur ce site, le chariot étant illustré en position d'utilisation et vu, de même que le rail, respectivement en coupe par un plan transversal repéré en XXIII-XXIII à la figure 24, et en élévation latérale perpendiculairement au plan longitudinal moyen, alors commun, de symétrie du rail et du chariot, dans un sens transversal repéré par une flèche XXIV à la figure 23.

De façon générale, on a désigné par 1 un rail selon l'invention à l'état terminé, par 2 sa plaque d'usure, considérée comme rigide au cours de la fabrication du rail comme après terminaison de celui-ci, et par 3 le corps de montage, quant à lui élastiquement flexible de façon maîtrisée, comme il apparaîtra par la suite. On a désigné respectivement par 4 et 5 une direction longitudinale et un plan longitudinal moyen de symétrie du rail 1, c'est-à-dire également de la plaque d'usure 2 et du corps de montage 3 lorsqu'ils sont assemblés pour constituer ce rail 1 ; par commodité de langage, on utilisera ces mêmes références 4 et 5 pour désigner respectivement une direction longitudinale et un plan longitudinal moyen de symétrie de la plaque d'usure 2 et du corps de montage 3 même lorsqu'ils sont mutuellement disjoints et notamment dans l'état dans lequel ils sont préfabriqués avant d'être assemblés pour constituer le rail 1. La rigidité précitée de la plaque d'usure 2 et de la flexibilité élastique précitée du corps de montage s'entendent par référence aux comportements comparés de leurs sections transversales pendant et après la fabrication du rail 1, étant entendu que l'un et l'autre peuvent par ailleurs fléchir élastiquement dans leur plan longitudinal moyen de symétrie 5.

Pour des raisons de simplicité, le rail 1, la plaque d'usure 2 et le corps de montage 3 seront considérés comme rectilignes, mais un Homme du Métier comprendra aisément que la présente invention s'applique également à des rails courbes et apportera sans difficulté et sans sortir du cadre de l'invention, aux dispositions et procédures qui vont être décrites, toute adaptation nécessaire à cet effet.

On se référera en premier lieu aux figures 1 et 2, qui montrent la plaque d'usure telle qu'elle est fabriquée et telle qu'elle se présente également pendant son assemblage avec le corps de montage 3 puis lorsque le rail selon l'invention 1 est terminé.

Cette plaque d'usure 2, avantageusement réalisée par profilage d'un feuillard d'acier inoxydable, de préférence, ou de cuivre ou de laiton, ou encore par tout procédé approprié en tout matériau électriquement conducteur approprié, présente une section transversale constante définie d'une part par une bande centrale plate 6 qui chevauche symétriquement le plan 5 auquel elle est perpendiculaire, et par deux rebords latéraux, longitudinaux 7, également plats, disposés d'un même côté de la plaque 6, respectivement de part et d'autre du plan 5 par rapport auquel ils sont mutuellement symétriques. Chacun des rebords 7 est plat et raccordé à la bande centrale 6 par un pli longitudinal respectif 8, arrondi en arc de cercle.

Plus précisément, la bande centrale 6 présente deux faces planes 9, 10 mutuellement parallèles et mutuellement opposées, l'une et l'autre perpendiculaires au plan 5 par rapport auquel elles sont respectivement symétriques, et ces deux faces 9 et 10 présentent une forme rectangulaire, de dimension longitudinale très largement supérieure à sa dimension transversale. La face 9, tournée à l'opposé des rebords 7, est destinée à transmettre de l'électricité, par conduction électrique, du rail 1, fixé au sol non représenté par l'intermédiaire de supports électriquement isolants également non représentés, mais bien connus d'un Homme du Métier, à un mobile qui se déplace longitudinalement, c'est-à-dire parallèlement au rail 1, et que l'on a schématisé à la figure 7 par un frotteur 11 appliqué à plat sur la face 9, sur laquelle ce frotteur 11 glisse longitudinalement au fur et à mesure du déplacement du mobile. La face 10 est quant à elle destinée à reposer à plat sur une face plane 13 de conduction électrique du corps 3 lorsque le rail 1 est terminé, pour se placer en relation de conduction électrique avec cette face 13, dans des conditions qui ressortiront de la suite.

Les rebords 7 sont placés en saillie par rapport à la face 10 de la bande centrale 6 et convergent mutuellement dans le sens d'un éloignement par rapport à celle-ci, suivant une direction transversale 16 du plan 5. Chacun d'entre eux présente, respectivement dans le sens d'un éloignement et dans le sens d'un rapprochement par rapport à ce plan 5, une face plane respective 14, 15, raccordée respectivement à la face 9 ou à la face 10 par un arrondi en arc de cercle non référencé, au niveau du pli 8 correspondant, et les deux faces 14 de même que les deux faces 15 convergent mutuellement dans le sens d'un éloignement par rapport à la bande centrale 6 suivant la direction 16. Au plus loin de la bande centrale 6 suivant cette direction 16, les deux faces planes 14 et 15 de chaque rebord 7 sont mutuellement raccordées par un chant longitudinal respectif 18, plan, sensiblement perpendiculaire aux deux faces 14, 15 du rebord 7 respectivement correspondant. Les chants 18 définissent ainsi pour chacun des rebords 7 un bord libre rectiligne, longitudinal respectif, délimitant les faces 14 et 15 du rebord 7 et plus généralement celui-ci dans son ensemble à l'opposé de son raccordement avec la bande centrale 6, et leur arête de raccordement avec la face 15 respective constitue la zone du rebord 7 correspondant la plus proche du plan 5.

Comme il apparaîtra plus loin, les faces 15 tournées vers le plan 5 définissent une face respective d'accrochage de la plaque d'usure 2 sur le corps de montage 3 et on remarque que chacune d'entre elles définit une forme en crochet avec la face 10 de la bande centrale 6.

La plaque d'usure 2 présente le profil transversal défini par la bande centrale 6 et les rebords 7 qui viennent d'être décrits sur la totalité de sa dimension longitudinale, entre deux faces transversales extrêmes 19, planes, si ce n'est que, dans l'exemple illustré et sans relation avec la mise en oeuvre de la présente invention, la face 9 se raccorde à chacune des faces 19 par un biseau ou chanfrein transversal extrême respectif 20.

On a désigné par L1 la dimension longitudinale ou longueur de la plaque d'usure 2 entre ses faces transversales extrêmes 19, par α1 l'angle défini par chacune des faces 15 ou faces d'accrochage avec la face 10 ou face de conduction électrique de la plaque d'usure 2, par p₁ la distance ou profondeur séparant de la face 10, suivant la direction 16, une arête longitudinale non référencée de jonction entre chaque face 15 et le chant 18 du rebord 7 correspondant, par p₂ la distance ou profondeur séparant de la face 10, suivant la direction 16, une arête longitudinale non référencée de jonction entre chaque face 14 et le chant 18 du rebord 7, la profondeur p₂ étant supérieure à la profondeur p₁, par e₁ l'épaisseur de la plaque d'usure 2, laquelle épaisseur e₁ est identique pour la bande centrale 6, les rebords 7 et les plis 8 raccordant les rebords 7 à la bande centrale 6, et par l₁ la largeur minimale intérieure de la bande centrale 6, c'est-à-dire la dimension séparant mutuellement, perpendiculairement au plan 5, les arêtes longitudinales de raccordement de chaque face 15 avec le chant 18 du rebord 7 respectivement correspondant. L'angle α₁, inférieur à 90°, est par exemple de l'ordre de 70° mais d'autres valeurs pourraient être choisies sans que l'on sorte pour autant du cadre de la présente invention.

On se référera à présent plus particulièrement aux figures 3 et 4, où l'on a illustré le corps de montage 3 dans une configuration de repos, c'est-à-dire tel qu'il est fabriqué, notamment par extrusion, en monobloc, en aluminium ou en alliage d'aluminium, ou encore par tout procédé approprié en tout matériau électriquement conducteur approprié.

Notamment lorsqu'il occupe cette configuration de repos, le corps de montage 3 présente une section transversale constante, de l'une à l'autre de deux faces transversales, planes, extrêmes 21 entre lesquelles il présente une dimension longitudinale ou longueur L2 qui, de préférence, est légèrement supérieure à la longueur L1, la différence entre ces deux longueurs étant toutefois négligeable au regard de leur valeur respective ; à titre d'exemple non limitatif, ainsi, la longueur L2 peut être de 12000 mm pour une longueur L1 de 11990 mm.

Cette section transversale est conformée de façon à définir dans le corps de montage 3 deux parties mutuellement opposées suivant la direction 16, à savoir une base longitudinale 22 de montage sur un support tel qu'un groupe d'isolateurs solidaires du sol, de façon non représentée mais identique dans le cas de la présente invention à ce qu'elle est dans le cas d'un rail d'alimentation électrique de l'art antérieur, et une tête longitudinale 23 de réception de la plaque d'usure 6, laquelle tête est quant à elle élastiquement compressible perpendiculairement au plan 5 par fléchissement élastique par rapport à la base 22.

La conformation de la base 22 est indifférente au regard de la présente invention, dès lors que cette base 22 est rigide. Dans l'exemple non limitatif illustré, elle présente à l'opposé de la tête 23 suivant la direction 16 une face longitudinale, plane 24, rectangulaire, perpendiculaire au plan 5 qu'elle chevauche symétriquement, et cette face 24 est délimitée dans le sens d'un éloignement par rapport au plan 5 par raccordement avec deux chants 25 plans, parallèles au plan 5 et mutuellement symétriques par rapport à celui-ci. Ces deux chants 25, tournés dans le sens d'un éloignement par rapport au plan 5, raccordent la face 24, du côté de la tête 23, à une face plane respective 26 qui, à partir de son raccordement avec le chant 25 correspondant, s'éloigne progressivement de la face 24 dans le sens d'un rapprochement vis-à-vis du plan 5, par rapport auquel les deux faces 26 sont mutuellement symétriques. Les faces 26 définissent avec la face 24 et les chants 25 un profil de préhension pour des organes non représentés de liaison avec les supports isolants également non représentés.

Dans le sens d'un rapprochement vis-à-vis du plan 5, qu'elle n'atteint pas, chaque face 26 se raccorde à un flanc longitudinal 27 d'une gorge longitudinale respective 28, dont ce flanc 27 est plan, parallèle au plan 5 et tourné vers celui-ci. Par un fond respectif 29, présentant avantageusement une section transversale en demi-cercle et fermant la gorge 28 dans le sens d'un rapprochement vis-à-vis de la face 24 suivant la direction 16, chaque flanc 27 se raccorde à un autre flanc 30 de la même gorge 28, lequel flanc 30 est également plan, parallèle au plan 5 dans la configuration de repos du corps de montage 3 et se prolonge au-delà du flanc 27 dans le sens d'un éloignement par rapport à la face 24 suivant la direction 13, jusqu'à se raccorder à un fond longitudinal 31 d'une autre gorge ou fente longitudinale respective 32 placée directement en regard de la gorge 28 correspondante suivant la direction 16, en ce sens que les fonds 29, 31 d'une gorge 28 et d'une gorge ou fente 32 située du même côté du plan 5 que celle-ci sont situés directement en regard l'un de l'autre suivant la direction 16.

Chaque fond 31, présentant avantageusement une section transversale en arc de cercle d'une longueur angulaire légèrement inférieure à 180°, raccorde le flanc 30 de la gorge ou fente 32 correspondante à un autre flanc longitudinal 33 de celle-ci, lequel flanc 33 est plan, tourné vers le plan 5 et s'écarte progressivement de celui-ci dans le sens d'un rapprochement vis-à-vis de la face 24 suivant la direction 16, de telle sorte que la gorge ou fente 32 soit ouverte vers la base 22 suivant cette direction 16.

Chaque flanc 33 s'étend ainsi, dans le sens d'un rapprochement vis-à-vis de la face 24 suivant la direction 16, jusqu'à une arête 34 rectiligne, longitudinale; cette arête 34 est placée en regard de la face 26 située du même côté du plan 5, sans toutefois entrer en contact avec cette face 26 quelle que soit la configuration du corps de montage 3 parmi les configurations qui seront décrites ultérieurement, de façon à laisser subsister un espace continu 135 entre l'arête 34 et la face 26 correspondante quelle que soit cette configuration.

Chaque arête 34 raccorde le flanc 33 correspondant à une face en biseau 35 respective, laquelle est longitudinale, plane, et orientée approximativement à 45° par rapport au plan 5 dont elle s'éloigne dans le sens d'un éloignement par rapport à la face 24 suivant la direction 16, jusqu'à se raccorder à un méplat 36 approximativement parallèle au plan 5 et tourné dans le sens d'un éloignement par rapport à celui-ci.

Dans le sens d'un éloignement par rapport à la face 24 suivant la direction 16, chaque méplat 36 se raccorde à un pan plan 37 longitudinal, approximativement perpendiculaire au plan 5, tourné dans le sens d'un éloignement par rapport à la face 24 suivant la direction 16 et situé, suivant cette direction, approximativement au même niveau que le fond 31 des gorges ou fentes 32.

On remarquera que chaque méplat 36 forme ainsi, par rapport aux zones du corps 3 qui en sont directement voisines aussi bien dans le sens d'un rapprochement par rapport à la face 24 que dans le sens d'un éloignement par rapport à celle-ci, suivant la direction 16, à savoir par rapport à la face en biseau 35 correspondante et par rapport au pan 37 correspondant, une saillie dans le sens d'un éloignement par rapport au plan 5. On a désigné par e₅ la dimension de chaque méplat 36 entre ses raccordements, non référencés, avec la face en biseau 35 et avec le pan 37 respectivement correspondants, mesurée suivant la direction 16 ; cette dimension peut être amenée à varier en fonction de la configuration du corps de montage 3, parmi les configurations qui seront décrites ultérieurement, mais les variations qu'elle peut être ainsi amenée à subir sont suffisamment faibles pour pouvoir être négligées dans le cadre de la présente description.

Chaque pan 37 raccorde le méplat 36 correspondant, dans le sens d'un rapprochement vis-à-vis du plan 5, à un pan également plan, longitudinal 38 tourné dans le sens d'un éloignement par rapport au plan 5, dont ce pan 38 s'éloigne à partir de son raccordement avec le pan 37, dans le sens d'un éloignement par rapport à la face 24 suivant la direction 16, jusqu'à se raccorder par une arête rectiligne 49, longitudinale, à une facette longitudinale, plane 39 également tournée dans le sens d'un éloignement par rapport au plan 5 mais présentant par rapport à celui-ci une obliquité inverse de celle du pan 38, de telle sorte que la facette 39 se rapproche du plan 5 dans le sens d'un éloignement par rapport à la face 24 suivant la direction 16 et que, ainsi, le pan 38 soit placé en contre- dépouille par rapport à cette facette 39 pour servir, comme il apparaîtra plus loin, à l'accrochage de l'un des rebords 7 de la plaque d'usure 2 par la face d'accrochage 15 correspondante ; on remarquera qu'en outre, le pan 38 en contre- dépouille est placé en retrait vers le plan 5 par rapport au méplat correspondant 36 du fait de la présence du pan 37.

Dans le sens d'un éloignement par rapport à la face 24 suivant la direction 16, chaque facette 39 raccorde le pan 38 à une face extrême plane 40 tournée dans le sens d'un éloignement par rapport à la face 24 suivant la direction 16, laquelle face 40 est longitudinale et approximativement perpendiculaire au plan 5. Toutefois, dans la configuration de repos illustrée à la figure 3, la face 40 s'éloigne progressivement de la face 24, suivant la direction 16, dans le sens d'un rapprochement vis-à-vis du plan 5, en formant par rapport à un plan géométrique 12 perpendiculaire au plan 5 et longitudinal un angle α₂ proche de zéro, et par exemple de l'ordre de 1°. Le raccordement de la facette 39 avec la face extrême 40 s'effectue le long d'une arête rectiligne 50, longitudinale.

Dans le sens d'un rapprochement par rapport au plan 5, la face 40 se raccorde par une arête rectiligne, longitudinale 41 à une face 42 longitudinale, plane, tournée vers le plan 5 et s'éloignant de celui-ci dans le sens d'un rapprochement par rapport à la face 24 suivant la direction 16. Suivant cette direction 16, la face 42 s'étend jusqu'à un niveau intermédiaire entre les niveaux de raccordement du pan 38 avec le pan 37 et avec la facette 39, respectivement, c'est-à-dire jusqu'à une distance de la face 24 légèrement supérieure à celle qui en sépare le fond 31 de la gorge ou fente 32 suivant la direction 16.

Dans le sens d'un rapprochement vis-à-vis de la face 24 suivant la direction 16, chaque face 42 se raccorde à une face 43 également longitudinale et plane, laquelle se rapproche par contre du plan 5 dans le sens d'un rapprochement par rapport à la face 24 suivant la direction 16 pour se raccorder, à une distance de la face 24 suivant cette direction 16 qui correspond sensiblement à la distance qui sépare de la face 24 le fond 29 de chaque gorge 28, par une transition en arc de cercle, à une face 44 longitudinale, plane, perpendiculaire au plan 5, que la face 44 chevauche pour raccorder mutuellement les deux faces 43 de telle sorte que les faces 42, 43 et 44 définissent dans le corps de montage 3 une fente longitudinale 45 dont la face 44 définit le fond et qui est ouverte, dans le sens d'un éloignement par rapport à la face 24 suivant la direction 16, entre les arêtes 41, de l'une à l'autre des faces extrêmes 21 du corps de montage 3. Cette fente 45 divise la tête 23, suivant le plan 5, en deux moitiés 46 mutuellement symétriques par rapport à ce plan 5 et définies chacune, d'un côté respectif de ce plan, par le flanc 30, le fond 31 et le flanc 33 de la gorge ou fente 32, ouverte vers la base 22 suivant la direction 16, par la face 35, le méplat 36, le pan 37, le pan en contre- dépouille 38, la facette 39, la face extrême 40 et les faces 42 et 43, les deux demi- têtes 46 ainsi définies étant raccordées entre elles par la base rigide 22 quant à elle définie par la face 24, les chants 25 et les faces 26 ainsi que les flancs 27 et fonds 29 des gorges 28.

Pour chaque demi- tête ou moitié de tête 46, le flanc 33, la face 35, le méplat 36, le pan 37, le pan en contre- dépouille 38, la facette 39, la face 40 et la face 42 définissent une partie d'extrémité libre ou partie extrême 47 rigide au même titre que la base 22 alors que le flanc 30 et la face 43 définissent, entre cette partie extrême rigide 47 et la base 22 également rigide, une partie intermédiaire 48 raccordant ces dernières entre elles et définissant en comparaison avec elles une zone affaiblie de fléchissement élastique privilégié de la moitié respective 46 de la tête à partir de la configuration de repos illustrée aux figures 3 et 5, notamment vers le plan 5 et vers l'autre demi- tête 46, jusqu'à une configuration de fléchissement élastique maximal illustrée à la figure 6, dans laquelle les deux demi- têtes viennent en butée mutuelle le long du plan 5 par les arêtes 41.

Dans cette configuration de fléchissement élastique maximal, dans laquelle la symétrie mutuelle des moitiés de têtes 46 par rapport au plan 5 est conservée, la fente 45, alors fermée dans le sens d'un éloignement par rapport à la base 22 par contact mutuel des arêtes 41, est comparativement rétrécie et les faces 43 sont approximativement parallèles au plan 5 alors que les faces 42 convergent de façon plus prononcée vers le plan 5 dans le sens d'un éloignement par rapport à la base 22 suivant la direction 16. En outre, dans cette configuration de fléchissement élastique maximal, l'orientation des faces extrêmes 40 des demi- têtes 46 est inversée en comparaison avec l'orientation qu'elles présentent dans la configuration de repos, en ce sens que ces faces 40 sont inclinées de façon à se rapprocher de la base 22 suivant la direction 16 dans le sens d'un rapprochement par rapport au plan 5 ; cependant, leur orientation par rapport à la face 42 de la même demi- tête 46 de même que par rapport à la facette 39, au pan en contre- dépouille 38, ainsi que par rapport au plan 37, au méplat 36, à la face 35 et au flanc 33 de cette même demi- tête 46 reste inchangée du fait de la rigidité de la partie extrême 47.

On observera que, selon ce mode de réalisation préféré, chaque partie intermédiaire 48 s'amincit progressivement, perpendiculairement au plan 5, de son raccordement à la base 22 jusqu'à son raccordement avec la partie extrême respective 47 si bien que le fléchissement élastique est privilégié à proximité immédiate du raccordement de chaque partie intermédiaire 48 avec la partie extrême 47 correspondante.

Un Homme du Métier comprendra aisément que le passage de la configuration de repos, illustrée aux figures 3 et 5, à la configuration de fléchissement élastique maximal dans le sens d'un rapprochement mutuel des deux demi- têtes 46, illustrée à la figure 6, et inversement par élasticité notamment des parties intermédiaires 48, s'accompagne d'un passage par une configuration intermédiaire déterminée du corps 3, illustrée à la figure 7, configuration dans laquelle la symétrie mutuelle des deux demi- têtes 46 par rapport au plan 5 est conservée et dans laquelle les arêtes 41, bien que plus proches du plan 5 que dans la configuration de repos, sont encore mutuellement disjointes. Dans cette configuration intermédiaire, les deux faces extrêmes 40 sont mutuellement coplanaires, perpendiculaires au plan 5, et forment des moitiés respectives, séparées par la fente 45, d'une même face plane qui est la face 13 de conduction électrique du corps 6 vers la plaque d'usure 2, c'est-à-dire la face 13 sur laquelle la plaque d'usure 2 s'applique à plat, par l'intermédiaire de la face de conduction électrique 10 de sa bande centrale 6, une fois le rail 1 terminé par assemblage mutuel de la plaque d'usure 2 et du corps de montage 3. Naturellement, le profil de chaque partie extrême 47 reste inchangé dans cette configuration intermédiaire, en comparaison avec la configuration de repos et avec la configuration de fléchissement élastique maximal.

Dans cette configuration intermédiaire, une fois le rail 1 terminé, les contre- dépouilles 38 disposées respectivement de part et d'autre de la face 13 servent à l'accrochage des rebords 7 de la plaque d'usure 2 et, à cet effet, chacun de ces rebords 7 s'applique à plat, par sa face d'accrochage 15, sur l'un, respectif des pans 38, à savoir sur une zone de ce pan 38 directement adjacente au raccordement de celui-ci avec la facette 39 alors que, de préférence, la partie de ce pan 38 directement adjacente au pan 37 reste dégagée afin d'éviter un contact entre le chant 18 de chaque rebord 7 et ce pan 37 notamment lors de la mise en place de la plaque d'usure 2 sur le corps de montage 3, laquelle s'effectue alors que ce corps de montage 3 présente, comme il apparaîtra plus loin, sa configuration de fléchissement élastique maximal dans laquelle les pans 37 s'éloignent progressivement de la face 24 suivant la direction 16 dans le sens d'un éloignement par rapport au plan 5. Ainsi, lorsque le rail 1 est terminé, il existe entre chaque chant 18 et le plan 37 correspondant, suivant la direction 16, un jeu qui subsiste en permanence, c'est-à-dire quelles que soient les tolérances dimensionnelles et les variations dimensionnelles, par dilatation thermique, de la plaque d'usure 2 et du corps de montage 3, ce qui permet de maintenir en permanence entre les faces d'accrochage 15 et les pans 38 un effet de came qui résulte de leur orientation par rapport au plan 5 et de la tendance du corps de montage 3, alors retenu dans ladite configuration intermédiaire exclusivement par appui des demi- têtes 46 contre les rebords 7 de la plaque d'usure 2 dans le sens d'un éloignement par rapport au plan 5, à reprendre par élasticité sa configuration de repos, et dont le résultat est de plaquer la face de conduction électrique 10 de la bande centrale 6 de la plaque d'usure 2 sur les faces extrêmes 40, alors mutuellement coplanaires, des demi- têtes 6 quelles que soient les tolérances dimensionnelles et les variations dimensionnelles, par dilatation thermique, de la plaque d'usure 2 et du corps de montage 3.

Pour permettre un accrochage de la plaque d'usure 2 sur le corps de montage 3 dans de telles conditions, on retrouve l'angle α₁ entre chaque pan en contre- dépouille 38 et la face extrême 40 de la même demi- tête 46, naturellement quelle que soit la configuration du corps 3 par fléchissement élastique, l'arête 49 de raccordement entre chaque pan 38 et la facette correspondante 39 est située par rapport à la face 40 de la même demi- tête 46, perpendiculairement à cette face 40, à une distance d₁ inférieure à la profondeur p₁, et le pan 37 est situé à une distance d₂ de la face 40, mesurée perpendiculairement à cette face, supérieure à la profondeur p₂ ; naturellement, ces distances d₁ et d₂ ne varient pas lors du fléchissement élastique du corps 3.

Par contre, l'écartement mutuel des arêtes 49 de raccordement de chaque facette 39 avec le pan 38 de la même demi- tête 46, perpendiculairement au plan 5, varie en fonction de la configuration que le corps 3 présente par fléchissement élastique.

Ainsi, dans la configuration de repos illustrée aux figures 3 et 5, cet écartement présente une valeur l₂ > l₁ alors que, dans la configuration de fléchissement élastique maximal illustrée à la figure 6, cet écartement présente une valeur l₃ au plus égale à l₁, et de préférence légèrement inférieure à l₁, par exemple de 1 à 2 mm. Par contre, dans la configuration intermédiaire déterminée illustrée à la figure 7, la valeur l₄ de cet écartement mutuel, intermédiaire entre les valeurs l₂ et l₃, est à nouveau supérieure à l₁ et en pratique égale à la distance non repérée séparant mutuellement les faces d'accrochage 15, perpendiculairement au plan 5, à une distance de la face 10 de la bande centrale 6 de la bande d'usure 2, mesurée perpendiculairement à cette face 10, égale à la distance d₁ qui sépare chaque arête 49 de la face extrême 40 de la même demi- tête 46, du fait de l'application de chaque pan 38 à plat contre l'une, respective, des faces d'accrochage 15 dans cette configuration une fois le rail 1 terminé ; en outre, dans cette configuration, les raccordements respectifs, non référencés, des pans en contre- dépouille 38 avec les pans 37 correspondants sont mutuellement espacés, perpendiculairement au plan 5, d'une distance l₁₁ inférieure à l₁.

Ainsi, si l'on superpose les profils transversaux respectifs du corps 3 dans sa configuration de repos et de la plaque d'usure 2, comme on l'a montré à la figure 5, on constate un recouvrement d'une zone de chaque demi- tête 46 localisée à proximité de l'arête 49 et le long de la zone du pan correspondant 38 adjacente à cette arête 49 par un rebord 7 respectif, et plus précisément par une partie du chant 18 de celui-ci et par une zone de celui-ci située le long de la face d'accrochage 15, de façon adjacente à ce chant 18, étant entendu que le corps 3 et la plaque d'usure 2 sont supposés présenter le même plan longitudinal moyen 5 de symétrie. On a désigné la valeur moyenne de ce chevauchement, mesurée perpendiculairement au pan 38 ou à la face 15, par e₂ à la figure 5 ; à titre d'exemple non limitatif, cette valeur peut être comprise entre 1 et 2 mm, étant entendu qu'elle est nulle lorsque le corps de montage présente sa configuration prédéterminée illustrée à la figure 7, et que le chevauchement est remplacé par un jeu lorsque le corps de montage 3 présente sa configuration de fléchissement élastique maximal illustrée à la figure 6.

On observera que l'on peut prédéterminer la valeur e₃ que présente l'écartement mutuel des arêtes 41 perpendiculairement au plan 5 dans la configuration de repos, la valeur l₃ étant approximativement égale à la valeur l₂ diminuée de e₃ ; dans la configuration intermédiaire déterminée du corps 3, illustrée à la figure 7, cet écartement mutuel présente une valeur e₄ inférieure à la valeur e₃ mais non nulle.

De même, l'écartement mutuel, perpendiculairement au plan 5, des arêtes 50 de liaison de chaque facette 39 avec la face 40 de la même demi- tête 46 varie en fonction de la configuration du corps 3, et ceci de telle façon que, dans la configuration de repos illustrée à la figure 7, il présente une valeur l₅ au plus égale, et de préférence sensiblement égale, à la largeur l₆ que la face 10 de la bande centrale 6 de la plaque d'usure 2 présente perpendiculairement au plan 5 entre les plis 8, c'est-à-dire entre ses raccordements arqués respectivement avec l'une et l'autre des faces d'accrochage 15 ; en pratique, la valeur de l₆ peut être sensiblement identique à la valeur de l₁ . Afin que l₅ présente une telle valeur, les arêtes 50 sont mutuellement espacées, perpendiculairement au plan 5, dans la configuration de repos illustrée à la figure 3, d'une distance dont la valeur l₇ est supérieure à l₅ dans la même mesure que e₃ est supérieure à e₄ et que l₂ est supérieure à l₄. En outre, la distance d₁ qui sépare chaque arête 49 de la face extrême 40 de la même demi-tête 46 est choisie supérieure à la distance d₃ qui sépare de la face 10 de la bande centrale 6 de la plaque d'usure 2 chacune des faces d'accrochage 15 au niveau du pli 8 correspondant, c'est-à-dire de son raccordement arqué avec cette face 10. Ainsi, dans la configuration illustrée dans la figure 7, les facettes 39 n'interfèrent pas avec les raccordements arqués des faces d'accrochage 15 avec la face 10.

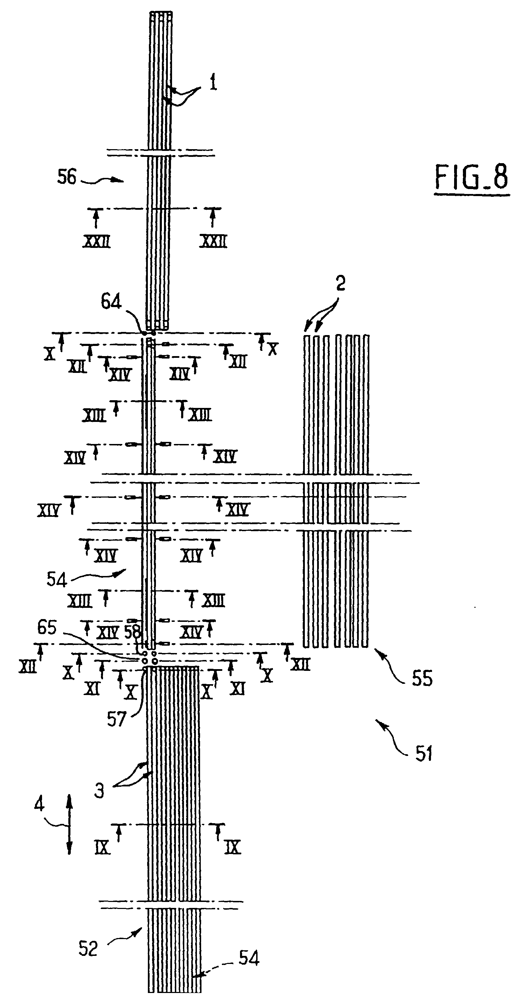

Dans ces conditions, le rail 1 illustré à la figure 7 peut être fabriqué d'une façon qui va être décrite à présent en référence aux figures 8 à 22.

En premier lieu, on préfabrique d'une part le corps de montage 3 dans sa configuration de repos, par exemple par extrusion en une seule pièce d'aluminium ou d'un alliage d'aluminium, et d'autre part la plaque d'usure 2 dans sa configuration définitive par exemple par profilage d'un feuillard d'acier inoxydable ou encore de cuivre ou d'un alliage de cuivre tel que du laiton.

Les corps de montage 3 et les plaques d'usure 2 ainsi préfabriqués sont amenés séparément à une installation 51 d'assemblage mutuel sous forme de rails 1. Un exemple non limitatif d'une telle installation 51 telle qu'elle peut être prévue en atelier est schématisé à la figure 8, où l'on retrouve la direction longitudinale 4, alors horizontale, qui continuera à servir de référence dans la mesure où les corps de montage 3 et les plaques d'usure 2 de même que les rails 1 terminés conservent cette direction longitudinale 4 avant, pendant et après les opérations d'assemblage.

L'installation 51 schématisée à la figure 8 comporte, en succession longitudinale dans un même sens de la direction 4 :
- une table 52 d'alimentation individuelle en corps de montage 3 en configuration de repos et dans une orientation dans laquelle chaque corps de montage 3 repose par la face 24 de sa base 22, tournée vers le bas, sur des rouleaux libres, horizontaux 153 de transport suivant la direction 4 et dans laquelle la tête 50 est tournée vers le haut, la table d'alimentation 52 étant bordée latéralement d'une table 53 de stockage des corps de montage 3 en attente, déjà orientés convenablement;
- un poste 54 d'assemblage mutuel de chaque corps de montage 3, introduit successivement par la table d'alimentation 52, et d'une plaque d'usure 2 respective, les plaques d'usure 2 en attente étant stockées sur une table de stockage 55 disposée latéralement par rapport au poste 54, dans une orientation telle qu'elles reposent par les chants 18 des rebords 7 sur la table 55 et que, ainsi, la face 9 de la bande centrale 6 soit tournée vers le haut;
- un poste 56 de colisage, de préférence tête-bêche, des rails 1 terminés, acheminés un à un depuis le poste 54 suivant la direction 4.

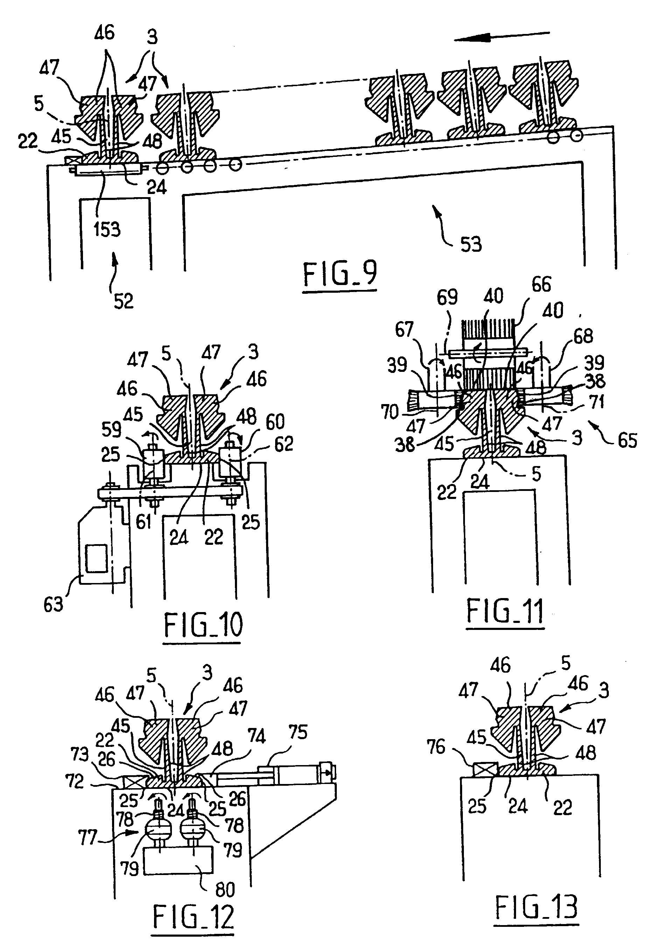

L'acheminement individuel, successif, des corps de montage 3 du poste 52 au poste 54 est assuré par deux groupes 57, 58, se succédant suivant la direction 4 entre les postes 52 et 54, de deux galets 59, 60 entraînés en rotation autour d'un axe vertical respectif 61, 62 par un moteur 63 et s'appliquant respectivement contre l'un et l'autre des chants 25 de la base 22. Un groupe identique 64 de deux galets est interposé, suivant la direction 4, entre les postes 54 et 56 pour acheminer du poste 54 au poste 56 les rails 1 terminés, également en s'appliquant contre les chants 25 de la base 22. Les trois groupes 57, 58, 64 sont identiques si bien que l'on a illustré à la figure 10 un seul d'entre eux, étant entendu que les galets des deux groupes 57 et 58 sont entraînés par un même moteur 63.

Entre les deux groupes 57 et 58 est intercalé, suivant la direction 4, un dispositif 65 de brossage et de graissage des faces 40, des facettes 39 et des pans en contre- dépouille 38 du corps 3 présentant encore sa configuration de repos, le graissage étant effectué au moyen d'une graisse de contact destinée à favoriser la conduction électrique ultérieure au moins entre les faces 40 de la face 10 de la plaque d'usure 2 et, de préférence, également entre les pans en contre- dépouille 38 et les faces d'accrochage 15.

A cet effet, le dispositif 65 comporte trois brosses rotatives 66, 67, 68. La brosse 66 est disposée au-dessus de la trajectoire des faces 40, sur la largeur l₇ équitablement répartie de part et d'autre de la trajectoire du plan 5, et elle présente un axe horizontal 69 autour duquel elle est entraînée en rotation de telle sorte que sa partie en contact avec les faces 40 se déplace à contresens de ces dernières. Les deux autres brosses 67, 68 sont disposées respectivement de part et d'autre de la trajectoire du corps de montage 3, au niveau des facettes 39 et des pans en contre- dépouille 38, et présentent un axe vertical respectif 70, 71 autour duquel elles sont entraînées à rotation de telle sorte qu'elles viennent en contact avec la facette 39 et le pan en contre-dépouille 38 de l'une, respective, des demi- têtes 46 en se déplaçant à contresens. La construction du poste 65 relève par ailleurs des aptitudes normales d'un Homme du Métier, et ne sera pas davantage détaillée.

A son arrivée au poste 54, après avoir été ainsi brossé et graissé au niveau des faces 40, des facettes 39 et des pans en contre- dépouille 38, chaque corps de montage 3, successivement, repose par la face 24 de sa base 22, tournée vers le bas, sur une table horizontale 72 sur laquelle il est immobilisé dans une position déterminée longitudinalement et transversalement par appui de l'un des chants 25 de la base 22 contre des cales 73 fixées à la table 72 et réparties longitudinalement le long de ce chant 25, et par appui de cales mobiles 74 sur l'autre chant 25, en regard des cales fixes 73 suivant une direction horizontale et transversale, sous l'action de vérins respectifs 75 susceptibles de déplacer ces cales 74 horizontalement dans le sens d'un rapprochement vis-à-vis des cales 73, pour assurer cette immobilisation d'un corps d'accrochage 3 par serrage de sa base 22, ou dans le sens d'un éloignement vis-à-vis des cales 73, pour libérer le corps de montage 3 notamment vis-à-vis d'une translation suivant la direction 4.

La table 72 peut être plane mais, comme le comprendra aisément un Homme du Métier, elle peut également présenter longitudinalement une flèche qu'elle communique au corps de montage 3 lorsqu'il est immobilisé sur elle entre les cales 73 et 74, cette flèche étant telle qu'une fois le rail 1 monté par sa base 22 sur des supports isolants, généralement dans une orientation dans laquelle la base 22 est tournée vers le haut et sa face 24 est horizontale, la flèche que le rail 1 prend nécessairement entre les supports de montage du fait de son poids annule cette flèche initiale, c'est-à-dire que le rail 1 initialement fléchi devienne rectiligne. La flèche à communiquer à cet effet, au poste 54, au corps de base 3 et par conséquent à la plaque d'usure 2 après assemblage mutuel est aisément déterminable par un Homme du Métier en fonction notamment de la distance séparant deux supports de montage du rail 1.

De préférence, les cales fixes 73 associées à une cale mobile 74 ne sont prévues qu'en deux exemplaires, disposées de façon à agir à proximité des faces extrêmes 21 du corps de montage 3 mais, compte tenu de la dimension longitudinale de celui-ci, par exemple de l'ordre de 12 mètres, d'autres cales fixes 76 sont réparties longitudinalement au poste 54 pour servir d'appui au même chant 25 que les cales 73, comme le montre la figure 13.

Une fois ainsi immobilisé au poste 54, chaque corps de montage 3 successivement subit un certain nombre d'opérations qui vont être décrites à présent en référence aux figures 12 et 14 à 20.

En des emplacements prédéterminés suivant la direction longitudinale 4, à proximité de chacune des faces 21, et comme le montre la figure 12, sous la table 72 sont montés des dispositifs de perçage 77 comportant par exemple deux groupes de deux broches 78 mutuellement symétriques par rapport à la trajectoire du plan 5 et montées à la rotation autour d'un axe vertical respectif 79 par rapport à un même chariot 80 susceptible de monter et de descendre sous la table 72, de façon commandée, pour percer dans la base 22 deux groupes de deux trous taraudés d'axe vertical, mutuellement symétriques par rapport au plan 5, afin de permettre un éclissage ultérieur entre les corps de montage 3 de deux rails 1 mutuellement juxtaposés longitudinalement, sur le site d'utilisation, en vue d'assurer une continuité mécanique et électrique entre eux. La réalisation de chaque dispositif 77 relève des aptitudes normales d'un Homme du Métier, et ne sera pas décrite davantage. Ce perçage ne constitue d'ailleurs pas une opération caractéristique de la présente invention.

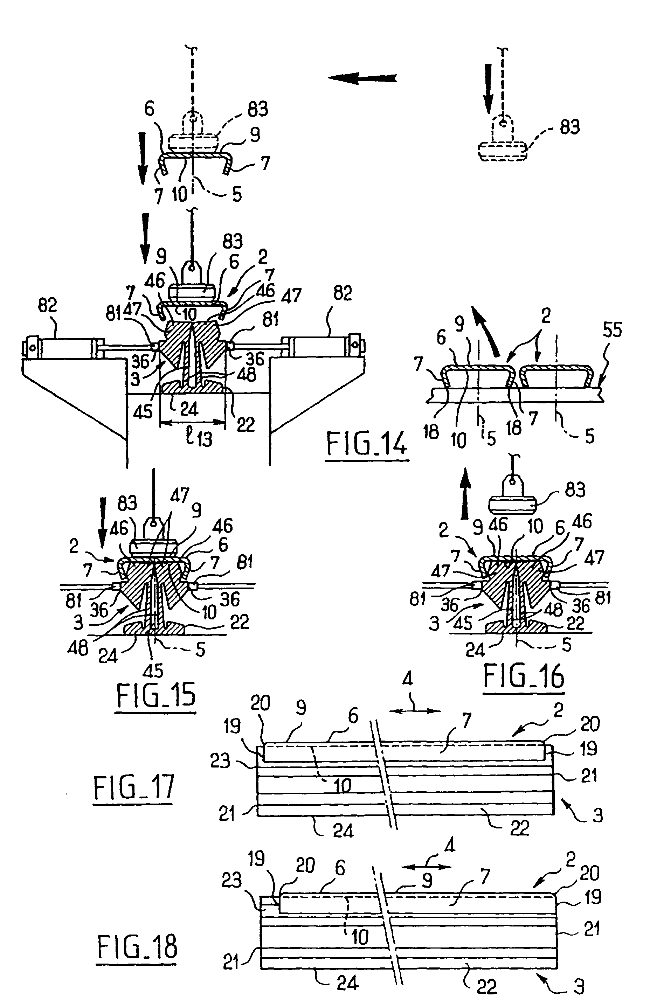

Par contre, les figures 14 à 20 illustrent l'assemblage de la plaque d'usure 2 avec le corps de montage 3 au poste 54, de façon quant à elle caractéristique de la présente invention.

Il en ressort que face à la trajectoire de chacun des méplats 36 du corps de montage 3 en configuration de repos, respectivement de part et d'autre de la trajectoire du plan 5 et symétriquement par rapport à cette trajectoire, le poste 54 comporte sur la totalité de la dimension longitudinale L₂ du corps de montage 3 une barre rectiligne respective 81, ou une succession respective de barres longitudinales 81 dont chacune correspond à une partie de la dimension longitudinale L₂ mais qui peuvent être considérées comme une barre respective unique, et que chacune de ces barres 81 ou successions similaires de barres est soutenue par l'intermédiaire d'un groupe respectif de vérins 82 répartis suivant la dimension longitudinale L₂ et susceptibles de déplacer les deux barres 81 ou successions similaires de barres, en synchronisme, suivant une direction horizontale et transversale, dans le sens d'un rapprochement vis-à-vis de la trajectoire du plan 5 ou dans le sens d'un éloignement par rapport à cette trajectoire, dans l'un et l'autre cas en conservant une symétrie mutuelle des barres 81 ou successions analogues de barres par rapport à cette trajectoire. Avantageusement, les barres 81 ou successions de barres présentent une flexibilité dans un plan horizontal et leur liaison avec les vérins 82 autorise un jeu limité en direction longitudinale pour autoriser une flexion des barres 81 ou successions de barres dans ledit plan horizontal sous l'action des vérins 82.

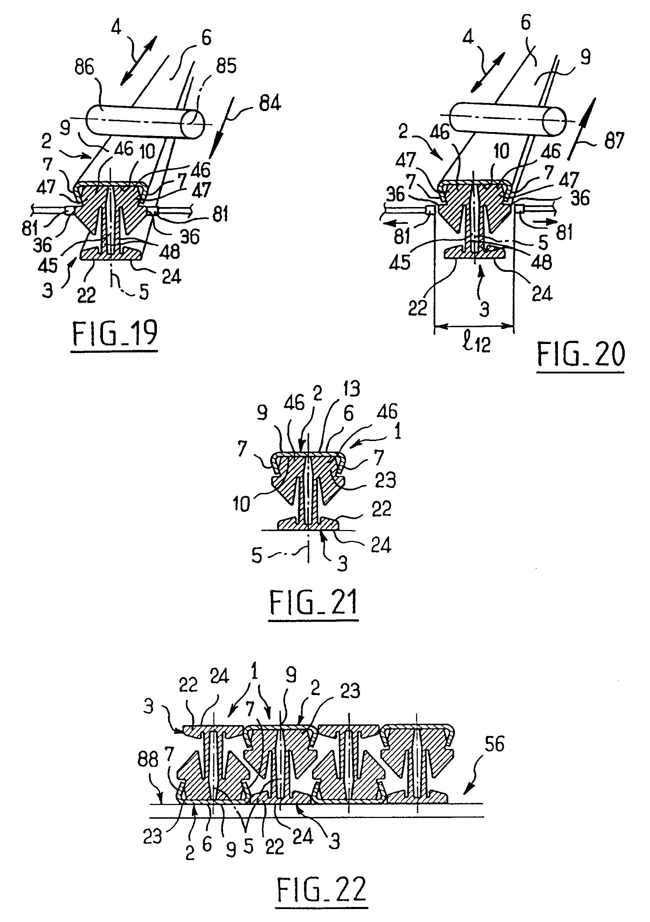

Les barres 81 ou successions similaires de barres peuvent ainsi évoluer entre une position d'espacement mutuel maximal, perpendiculairement à la trajectoire du plan 5, dans laquelle elles sont mutuellement espacées d'une distance l₁₂ supérieure à la distance l₁₄ qui sépare mutuellement les méplats 36, perpendiculairement au plan 5, lorsque le corps de montage 3 présente sa configuration de repos, comme le montre la figure 20, et une position de rapprochement maximal perpendiculairement à la trajectoire du plan moyen 5, position dans laquelle la valeur l₁₃ de leur écartement mutuel perpendiculairement à cette trajectoire est inférieure à la valeur l₉ de l'écartement mutuel des méplats 36 perpendiculairement au plan 5 dans la configuration intermédiaire prédéterminée illustrée à la figure 7, et correspond à la valeur l₁₀ qu'il y a lieu de donner à cet écartement mutuel des méplats 36 perpendiculairement au plan 5 pour placer le corps de montage 3 dans la configuration de fléchissement élastique maximal illustrée à la figure 6, c'est-à-dire pour amener les deux demi- têtes 46 juste en butée mutuelle suivant le plan 5 par les arêtes 41 sans pousser davantage les demi- têtes 46 dans le sens d'un rapprochement mutuel.

Les barres 81 ou successions analogues de barres occupent leur position d'écartement mutuel maximal, illustrée à la figure 20, lors de l'introduction d'un corps de montage 3 dans sa configuration de repos au poste 54 en provenance de la table d'alimentation 52, et ne sont amenées à leur position de rapprochement maximal qu'après immobilisation du corps de montage 3, par sa base 22, au moyen des cales 73 et 74.

Une fois cette immobilisation puis le perçage de la base 22 effectués, comme on l'a illustré à la figure 12, les vérins 82 sont actionnés pour amener progressivement les barres 81 ou successions analogues de barres de la position d'éloignement maximal à la position de rapprochement maximal, ce qui applique à chacune des demi- têtes 46, par action sur le méplat 36 respectivement correspondant, une poussée dans le sens d'un rapprochement vis-à-vis du plan 5, et cette poussée provoque un fléchissement élastique progressif de chacune des demi- têtes 46, au niveau de la partie intermédiaire 48 correspondante, jusqu'à ce que les arêtes 41 viennent en appui mutuel suivant le plan 5, c'est-à-dire jusqu'à ce que le corps 3 présente sa configuration de fléchissement élastique maximal, illustrée à la figure 6.

Le déplacement des barres 81 ou successions analogues de barres dans le sens d'un rapprochement mutuel est alors arrêté, mais les vérins 82 sont maintenus en pression de façon à maintenir la poussée sur les méplats 36, afin de retenir le corps 3 dans sa configuration de fléchissement élastique maximal, comme le montre la figure 14.

Alors, comme le montre également cette figure 14, un dispositif de levage non représenté, commandé de façon appropriée, saisit une plaque d'usure 2 sur la table de stockage 55, par exemple au moyen d'un électro-aimant 83 s'appliquant sur la face 9 de la bande centrale 6 lorsque la plaque d'usure 2 est en acier inoxydable, et vient placer la plaque d'usure 2 ainsi saisie au-dessus du corps de montage 3, dans une orientation dans laquelle les rebords 7 sont tournés vers le bas et les plans moyens respectifs de la plaque d'usure 2 et du corps de montage 3 coïncident et à un niveau tel que les chants 18 des rebords 7, tournés vers le bas, soient placés à un niveau supérieur à celui des faces extrêmes 40 des demi- têtes 46 du corps 3. Alors, en maintenant cette orientation de la plaque d'usure 2 par rapport au corps de montage 3, le cas échéant avec l'aide de dispositifs appropriés de guidage, non représentés mais aisément concevables par un Homme du Métier, le dispositif de levage descend progressivement la plaque d'usure 2 vers le corps d'ancrage 3 et, dans la mesure où ce dernier présente sa configuration de fléchissement élastique maximal, illustrée à la figure 6, dans laquelle les arêtes 49 sont mutuellement espacées d'une distance l₃ inférieure à la distance l₁ séparant les chants 18 des rebords 7, ces derniers franchissent les arêtes 49 lors de cette descente de la plaque d'usure 2, puis cette dernière vient reposer par la face 10 de sa bande centrale 6 sur les faces 40, ou plus précisément sur les arêtes 50 de liaison de ces faces 40 avec les facettes 39 compte tenu de l'orientation que présentent alors les faces 40. Cette étape finale de la descente de la plaque d'usure 2 sur le corps d'ancrage 3 est illustrée à la figure 15. On remarquera que les facettes 39, inclinées de façon à se rapprocher du plan 5 dans le sens d'un éloignement par rapport à la face 24 suivant la direction 16, de façon encore accrue dans cette configuration de fléchissement élastique maximal en comparaison avec l'état de repos du corps 3, facilitent l'engagement des rebords 7 respectivement de part et d'autre de la tête 50 puis le franchissement des arêtes 49 lors du mouvement de descente qui vient d'être décrit.

De préférence, les barres 81 présentent une hauteur ou épaisseur, non référencée, au plus égale à la dimension e₅ des méplats 36, de façon à pouvoir s'appliquer contre ces derniers sans former de saillie au-dessus d'eux, c'est-à-dire sans risque de gêner ce mouvement de descente par un contact intempestif avec les rebords 7.

Ensuite, comme le montre la figure 16, après que l'électro-aimant 83 ait été désactivé, le dispositif de levage remonte cet électro-aimant mais la plaque d'usure 2 reste sur le corps de montage 3 toujours maintenu par les vérins 82 et les barres 81 dans sa configuration de fléchissement élastique maximal.

Les figures 17 et 18 illustrent deux possibilités de positionnement longitudinal de la plaque d'usure 2 par rapport au corps de montage 3 à l'issue de cette étape de dépôt de la plaque d'usure 2 sur le corps de montage 3. Selon la figure 17, ce dépôt peut s'effectuer de telle sorte que la plaque d'usure 2 soit longitudinalement centrée par rapport au corps de montage 3, c'est-à-dire que chacune des faces extrêmes 19 de la plaque d'usure 2 soit placée en retrait longitudinal, d'une même distance égale à la moitié de la différence entre les dimensions L1 et L2, par rapport à une face extrême 21 respective du corps de montage 3. La figure 18 illustre une position dans laquelle l'une des faces 19 est placée coplanairement à l'une des faces 21 alors que l'autre face 19 est placée en retrait par rapport à l'autre face 21, d'une distance longitudinale correspondant à la différence entre les dimensions L1 et L2. Dans l'un et l'autre cas, la dimension L₂, supérieure à la dimension L₁, constitue la longueur du rail 1 terminé.

Au cours d'une étape suivante, illustrée à la figure 19, l'application de la plaque d'usure 2 sur les arêtes 50 de jonction entre les faces 40 et les facettes 39 est parfaite par pressage alors que le corps 3 est retenu dans sa position de fléchissement élastique maximal. A cet effet, un chariot non représenté, prévu au poste 54, effectue au-dessus de l'ensemble formé par le corps de montage 3 et la plaque d'usure 2 un déplacement longitudinal dans un premier sens 84. Ce chariot porte, à la rotation libre suivant un axe horizontal, transversal 85, un rouleau 86 qui s'applique par sa génératrice inférieure sur la face 9 de la bande centrale 6 de la plaque d'usure 2, par exemple sous l'effet de moyens élastiques non représentés ou encore sous l'effet de son propre poids. Le rouleau 86 parcourt ainsi la face 9 de la bande centrale 6 de la plaque d'usure 2, de l'un à l'autre des biseaux 20, dans le sens 84.

Ensuite, comme le montre la figure 20, le rouleau 86 est ramené dans le sens 87 opposé au sens 84 de l'un à l'autre des biseaux 20 et, au fur et à mesure qu'il se déplace ainsi, les paires de vérins 82 au niveau desquelles il passe successivement sont activées pour ramener progressivement les barres 81 à leur position relative d'écartement mutuel maximal, moyennant une flexion de ces barres 81 ou successions de barres dans un plan horizontal, ce qui autorise un retour progressif du corps de montage 3 vers sa configuration de repos.

Toutefois, au cours de ce retour, les pans en contre- dépouille 38 viennent buter contre les faces d'accrochage 15 du rebord 7, dans le sens d'un éloignement par rapport au plan 5, jusqu'à venir s'appliquer à plat contre ces faces d'accrochage 15, en entraînant du fait de l'angle α₁ une application de la face 10 de la bande centrale 6 de la plaque d'usure 2 à plat contre les faces extrêmes 40 alors devenues coplanaires pour former la face 13 de conduction électrique du corps 3 vers la face de conduction électrique 10 de la plaque d'usure 2. En d'autres termes, cette dernière arrête le corps de montage 3 dans la configuration intermédiaire déterminée illustrée à la figure 7, au cours du retour du corps de montage 3 vers sa configuration de repos, si bien que le corps de montage 3 est maintenu en précontrainte de fléchissement élastique entre les rebords 7 de la plaque d'usure 2.

A titre d'exemple non limitatif, pour un angle α₁ de l'ordre de 70°, on a obtenu de bons résultats aux essais, avec un corps de montage 1 en aluminium et une plaque d'usure 2 en acier inoxydable, en dimensionnant le corps de montage 1 de telle sorte que celui-ci applique à chaque rebord 7, par l'intermédiaire du pan en contre- dépouille 38 correspondant, un effort de 150 Newton traduisant par une pression de 2,5 MPa.

Un rail 1 est ainsi terminé, comme le montre la figure 21, et, après que son corps de montage 3 ait été libéré par un déplacement approprié des cales mobiles 74, ce rail est pris en charge par le groupe 64 de galets moteurs qui l'amène au poste 56 de colisage auquel, de préférence, les rails 1 successivement terminés sont cotisés tête-bêche comme le montre la figure 22. A cet effet, un rail 1 sur deux rails parvenant au poste 56 est retourné de telle sorte que les rails 1 soient stockés sur une table horizontale, plane 88 du poste 56 alternativement dans une orientation dans laquelle ils reposent sur cette table 88 par la face 24 de la base 22 et dans une orientation dans laquelle ils reposent sur cette table 88 par la face 9 de la bande centrale 6 de la plaque d'usure 2, les rails 1 successivement fabriqués étant ainsi juxtaposés sur la table 88, parallèlement entre eux, avant d'être cotisés puis acheminés vers une aire de stockage ou vers l'utilisation.

On observera que la plaque d'usure 2 laisse intégralement dégagée une zone de chaque partie extrême 47 délimitée par le pan 37, le méplat 36, la face 35, l'arête 34 et le flanc 33 de la gorge 32, laquelle zone se présente sous la forme d'un prolongement 89 de la partie extrême 47 le long de la partie intermédiaire 48, vers la base 22 suivant la direction 16. Ce prolongement 89 respectif n'entre en contact ni avec la base 22, ni avec cette partie intermédiaire 48, ce qui permet d'accrocher sur la base 22, de façon non représentée mais aisément compréhensible par un Homme du Métier, un capot isolant analogue à ceux dont on coiffe les rails d'alimentation électrique de l'art antérieur.

On observera également qu'en dépit de la fermeté d'ancrage assurée par élasticité entre la plaque d'usure 2 et le corps de montage 6, il reste possible, par la suite, de démonter une plaque d'usure 2 usée ou endommagée, en appliquant à nouveau aux méplats 36 du corps de montage 3 une poussée amenant les deux demi- têtes 46 dans la position de fléchissement élastique maximal illustrée à la figure 6, avant de placer une nouvelle plaque d'usure 2 que l'on fixe à nouveau sur le corps de montage 6 en relâchant la poussée précitée, alors que le remplacement d'une plaque d'usure endommagée ou usée est généralement impossible avec les rails d'alimentation électrique de l'art antérieur, qui doivent être remplacés dans leur intégralité en cas d'usure ou d'endommagement de leur plaque d'usure.

A cet égard, il est particulièrement avantageux que chacun des méplats 36 soit placé en saillie, dans le sens d'un éloignement vis-à-vis du plan 5, par rapport aux zones avoisinantes respectives du rail 1 considéré dans son intégralité après sa fabrication, c'est-à-dire après assemblage et solidarisation mutuelle de la plaque d'usure 2 et du corps de montage 3, ce qui permet de localiser avec précision l'action des moyens utilisés pour appliquer cette poussée, à savoir les barres 81 si l'on se réfère à l'installation 51 décrite en référence aux figures 8 à 22.

En effet, cette opération de remplacement d'une plaque d'usure usée ou endommagée peut s'effectuer après démontage du rail 1 de son support, sur site, et retour en atelier, et plus précisément au poste 54 de l'installation 51 où, après avoir immobilisé le corps 3 du rail 1 de la façon décrite en référence aux figures 12 et 13, on applique aux deux moitiés 46 de la tête 23 la poussée les amenant à la position de fléchissement élastique maximal, de la façon décrite en référence à la figure 14, ce qui libère la plaque d'usure 2 vis-à-vis du corps de montage 3. On ôte alors et on évacue la plaque d'usure 2 usée ou endommagée, par exemple au moyen de l'électro-aimant 83, puis, en retenant les deux moitiés 46 de la tête 23 dans leur position de fléchissement élastique maximal, on emboîte une nouvelle plaque d'usure 2 sur la tête 23 du corps 3, de la façon décrite en référence aux figures 14 à 19. Ensuite, on relâche progressivement la poussée appliquée aux moitiés 46 de la tête 23 pour laisser colle-ci revenir élastiquement vers la configuration de repos, mouvement au cours duquel elle est arrêtée dans sa configuration intermédiaire de précontrainte de fléchissement élastique entre les rebords 7 de la plaque d'usure 2, ce retour s'effectuant dans les conditions décrites en référence à la figure 20 et permettant de reconstituer le rail 1 tel qu'il est illustré aux figures 7 et 21 notamment. Le rail 1 ainsi rénové est ensuite libéré puis ramené sur son site d'utilisation pour être remonté sur son support par l'intermédiaire du corps de montage 3, ou encore acheminé vers une aire de stockage, en attente d'affectation, si certains impératifs ont conduit à le remplacer immédiatement après son démontage par un rail neuf ou rénové.

La nécessité de démonter le rail de son support, de le ramener en atelier pour le rénover, puis de le ramener sur le site d'utilisation pour le remonter sur le support constitue une contrainte dont on peut se dispenser en travaillant sur le site d'utilisation du rail, en laissant le corps 3 de celui-ci fixé sur son support.

A cet effet, on peut prévoir de monter sur un véhicule ferroviaire, par l'intermédiaire de moyens de positionnement aisément concevables par un Homme du Métier, une poutre rigide correspondant pour l'essentiel au poste 54 de l'installation fixe 51 décrite en référence notamment à la figure 8, c'est-à-dire comportant des moyens d'immobilisation dans une position précise par rapport à la base rigide 22 du corps de montage 3, à savoir l'équivalent de la table 72, des cales fixes 73 et 76 et des vérins 75 portant les cales mobiles 74, ou tout autre dispositif convenant à cet effet et prenant par exemple appui sur le support du rail, ainsi que les vérins 82 portant les barres de poussée 81 en regard des méplats 36 lorsque la poutre est immobilisée dans ladite position précise par rapport à la base 22 du corps de montage 3 par les moyens précités. On met alors en oeuvre le procédé de rénovation selon l'invention simultanément sur la totalité de la dimension longitudinale L₂ du rail 1, à savoir sur la totalité des longueurs respectives L₁ et L₂ de la plaque d'usure 2 et du corps de montage 3, de même que l'installation 51 décrite en référence à la figure 8 met en oeuvre le procédé de fabrication de ce rail 1 simultanément sur la totalité de ces dimensions longitudinales L₁ et L₂.

Il est cependant plus commode, pour des raisons d'encombrement du matériel utilisé, de mettre en oeuvre le procédé de rénovation selon l'invention sur le site d'utilisation du rail 1, dont le corps de montage 3 reste fixé à son support dans sa position déterminée d'utilisation, en opérant successivement dans des zones longitudinalement localisées du rail 1, se succédant longitudinalement dans un sens longitudinal déterminé, étant entendu que l'on peut également pratiquer ainsi pour fabriquer le rail 1 initialement, en mettant en oeuvre le procédé de fabrication précédemment décrit successivement dans des zones longitudinalement localisées du corps de montage et de la plaque d'usure, se succédant longitudinalement dans un sens longitudinal déterminé.

Ce travail progressif le long du rail 1, ou encore du corps de montage 3 et de la plaque d'usure 2 de celui-ci, peut aisément être effectué au moyen d'un chariot apte à se déplacer le long du rail 1, ou encore du corps de montage 3 et de la plaque d'usure 2 de celui-ci, en mettant en oeuvre localement certaines des opérations pratiquées simultanément sur la totalité de la longueur du rail 1, du corps de montage 3 et de la plaque d'usure 2 au poste 54 de l'installation 51.

Un exemple de réalisation d'un tel chariot a été illustré aux figures 23 et 24, en application à un travail de rénovation d'un rail 1 sur son site d'utilisation, alors que le corps 3 de montage de ce rail 1 est immobilisé par rapport au sol par l'intermédiaire de consoles de support réparties sur sa dimension longitudinale, l'une de ces consoles ayant été illustrée en 89 dans sa position d'installation sur site à la figure 23.

La console 89 présente une forme bien connue en elle-même, qui ne sera pas décrite dans son détail. On rappellera simplement qu'elle présente la forme générale d'une équerre disposée suivant un plan moyen transversal par rapport au rail 1 et comportant d'une part une aile verticale 90 qui est disposée latéralement par rapport au rail 1 et sert à la fixation solidaire de la console 89 sur un potelet non représenté, fixé au sol également non représenté, et d'autre part une aile horizontale 91 qui chevauche la base 22 du corps de montage 3, disposé de telle sorte que le plan 5 soit orienté approximativement verticalement et que la tête 23 et la plaque d'usure 2 soient tournées vers le bas ; la base 22 est immobilisée par rapport au support 89 par pincement entre une mâchoire 92 solidaire en permanence des ailes 90 et 91 et une mâchoire 93 solidarisée de façon amovible avec la mâchoire 92, ces deux mâchoires 92 et 93 coopérant avec la base 22 du corps de montage 3 d'une façon comparable à celle des cales fixes 73 et mobiles 74 décrites en référence à la figure 12. On observera que le prolongement 89 des parties extrêmes rigides 47 des deux moitiés 46 de la tête 23 du corps 3 vers la base 22 de celui-ci est conformé et dimensionné, notamment en ce qui concerne sa face en biseau 35, de façon à ne pas entrer en contact avec les mâchoires 92 et 93 qui, en outre, laissent dégagés au moins la zone de chaque face en biseau 35 la plus proche du méplat 46 correspondant, ainsi que ces méplats 46 et toutes les zones du rail 1 qui sont situées en dessous de ces derniers compte tenu de la position que le rail 1 occupe lorsqu'il est monté sur son site d'utilisation par l'intermédiaire de consoles telles que la console 89.

Compte tenu de cette position d'utilisation du rail 1, le chariot 94 est disposé sous ce dernier, au corps de montage 3 duquel il est suspendu par l'intermédiaire de moyens autorisant également son déplacement longitudinal de préférence par roulement, dans une position déterminée d'utilisation qui est illustrée aux figures 23 et 24 et qui servira de référence à la suite de la description du chariot 94. Dans cette description, on supposera également que le rail 1 est complet, c'est-à-dire que la plaque d'usure 2 est fixée au corps de montage 3, ce qui correspond par exemple à l'état du rail 1 avant rénovation par changement de sa plaque d'usure 2.

Le chariot 94 comporte un châssis rigide 95 intégralement situé à un niveau inférieur à celui de la plaque d'usure 2 du rail 1 et présentant la forme générale d'un parallélépipède rectangle symétrique par rapport à un plan longitudinal qui se confond avec le plan longitudinal moyen 5 de symétrie du rail 1 et auquel on attribuera par conséquent également la référence 5. Le châssis 95 présente en outre un plan transversal de symétrie 196, les notions de longitudinalité et de transversalité se référant à la direction longitudinale 4 du rail 1.

Plus précisément, dans son mode de réalisation illustré, le châssis 95 est formé d'un assemblage solidaire de cinq plaques métalliques plates, rectangulaires, à savoir:
- une paroi latérale 96 longitudinale, parallèle au plan 5 et disposée directement sous l'aile 90, elle-même parallèle au plan 5, la paroi 96 étant dimensionnée de façon à n'entrer en contact ni avec l'aile 90, ni avec le potelet non représenté portant la console 89, et présentant un bord longitudinal supérieur, un bord longitudinal inférieur et deux bords transversaux non référencés,
- un fond 97 longitudinal, perpendiculaire au plan 5 qu'il chevauche à une certaine distance en dessous de la plaque d'usure 2, ce fond 97 présentant un bord longitudinal par lequel il est boulonné à la paroi latérale 96 à proximité immédiate du bord longitudinal inférieur de celle-ci, un bord longitudinal symétrique du premier par rapport au plan 5 et deux bords transversaux, aucun de ces bords n'étant référencé,
- une paroi latérale 103 longitudinale, identique à la paroi latérale 96 dont elle est symétrique par rapport au plan 5, cette paroi 103 étant boulonnée au bord longitudinal du fond 97 opposé au bord de celui-ci boulonné à la paroi latérale 96 et présentant un bord longitudinal supérieur et un bord longitudinal inférieur, non référencés, situés au même niveau que le bord longitudinal supérieur et que le bord longitudinal inférieur de la paroi latérale 96, respectivement, et deux bords transversaux, également non référencés, situés dans un même plan transversal respectif, non illustré, que les bords transversaux de la paroi latérale 96,
- deux parois frontales 98, 99 transversales, dont chacune présente quatre bords transversaux non référencés à raison de deux bords latéraux librement jointifs de l'une, respective, des parois latérales 96 et 103 le long de l'un, respectif, des bords transversaux de celle-ci, d'un bord supérieur situé à un niveau inférieur à celui du bord longitudinal supérieur des parois latérales 96 et 103 et, lors de l'utilisation du chariot 94, à celui de la plaque d'usure 2 du rail 1 mais supérieur à celui du fond 97 et d'un bord inférieur à proximité immédiate duquel la paroi frontale 98, 99 est soudée au fond 97 et qui, en ce qui concerne la paroi frontale 98, est situé au même niveau que le bord longitudinal inférieur des parois latérales 96 et 103 et, en ce qui concerne la paroi frontale 99, forme une saillie vers le bas par rapport au bord longitudinal inférieur des parois latérales 96 et 103 de telle sorte que la paroi frontale 99 constitue sous le fond 97 une patte transversale 100 d'accrochage d'un organe de traction 101, par exemple par l'intermédiaire d'un trou 102 pratiqué dans la patte 100 suivant le plan 5.

La paroi latérale 96, le fond 97 et la paroi latérale 103 sont respectivement symétriques par rapport au plan 196, par rapport auquel les parois frontales 98 et 99 occupent des positions mutuellement symétriques.

Vers le haut, dans des positions mutuellement symétriques par rapport au plan 196, le fond 97 porte solidairement deux glissières 104 dont chacune est située entre l'une, respective, des parois frontales 98, 99 et le plan 196. Chacune de ces glissières 104 présente vers le haut une rainure en queue d'aronde 105 orientée suivant une même direction transversale 106 perpendiculaire au plan 5 et chacune de ces rainures 105 reçoit au coulissement suivant cette direction 106, par l'intermédiaire d'un tenon en queue d'aronde respectif 107, deux coulisseaux 108 disposés respectivement de part et d'autre du plan 5 dont les deux coulisseaux 108 peuvent ainsi s'éloigner ou se rapprocher suivant la direction 106 sans autre possibilité de déplacement par rapport au châssis 95 du chariot 94.

Naturellement, de même que d'autres modes de réalisation du châssis 95 du chariot 94 pourraient être choisis sans que l'on sorte pour autant du cadre de la présente invention, on ne sortirait pas du cadre de celle-ci en choisissant d'autres moyens de guidage des coulisseaux 108 au coulissement selon la direction 106, perpendiculaire au plan 5, par rapport au châssis 95 du chariot 94.

A un niveau intermédiaire entre celui du fond 97 du châssis 95 et celui des bords longitudinaux supérieurs des parois latérales 96 et 103, les deux coulisseaux 108 correspondant à une même glissière 104 sont percés, suivant un axe 109 perpendiculaire au plan 5, c'est-à-dire orienté suivant la direction 106, d'un trou taraudé respectif 110, des deux taraudages étant de même pas mais de sens opposé. Dans les deux trous taraudés 110 des coulisseaux 108 correspondant à une même glissière 104 vient en prise un filet respectif 111 d'une même vis 112 d'axe 109, les deux filets d'une même vis 112 étant de même pas mais de sens opposés.

Chacune des vis 112 est montée tourillonnante dans un palier coaxial respectif 135 des parois latérales 96 et 103, par deux zones extrêmes, de façon à pouvoir tourner librement autour de son axe 109 par rapport au châssis 95 mais elle est retenue à l'encontre de tout autre mouvement par rapport à celui-ci, et en particulier à l'encontre d'un mouvement parallèlement à son axe 109, suivant la direction 106, par butée d'une collerette coaxiale respective 136 de la vis 112 contre les deux parois latérales 96 et 103, entre celles-ci, de telle sorte que les coulisseaux 108 correspondant à une même glissière 104 puissent être réglés en position suivant la direction 106, dans le sens d'un rapprochement ou d'un éloignement par rapport au plan 5, par rotation de la vis 112 dans un sens ou dans l'autre mais restent en permanence mutuellement symétriques par rapport au plan 5. A cet égard, les vis 112 correspondant aux paires des coulisseaux 108 associées respectivement à l'une et l'autre des glissières 104 sont mutuellement indépendantes, si bien que les coulisseaux 108 correspondant à l'une des glissières 104 peuvent occuper par rapport au plan 5 une position dans laquelle ils en sont écartés différemment des coulisseaux 108 correspondant à l'autre glissière 104.

De préférence, les pas des filets 111 et des trous taraudés 110 sont irréversibles dans des conditions normales d'utilisation qui seront décrites ultérieurement, de telle sorte que la position des coulisseaux 108 par rapport au plan 5 soit stable et ne puisse être modifiée que par une action volontaire de rotation de la vis 112 respective, appliquée à celle-ci par exemple par action manuelle sur une clé 113 en prise avec un carré extrême 114 de cette vis 112, situé en saillie par rapport à la paroi latérale 103 dans le sens d'un éloignement par rapport au plan 5, suivant l'axe 109 respectif. On observera que, par contre, les vis 112 ne forment pas de saillie par rapport à la paroi latérale 96 dans le sens d'un éloignement par rapport au plan 5.

Vers le haut, chacun des coulisseaux 108 porte solidairement, suivant un axe transversal respectif 115 parallèle aux deux plans 5 et 196 et perpendiculaire à l'axe 109 correspondant, un arbre 116 qui forme suivant l'axe 115 une saillie vers le haut par rapport aux bords longitudinaux supérieurs des parois latérales 96 et 103, et les arbres 116 sont dimensionnés suivant l'axe respectif 115 et perpendiculairement à cet axe de telle sorte que, par un positionnement approprié des coulisseaux 108 de chaque paire suivant la direction 106 par rapport à la glissière 104 correspondante, ils se placent de part et d'autre du rail 1, c'est-à-dire de la plaque d'usure 2 et du corps 3, sans contact ni avec l'un, ni avec l'autre, dans la position d'utilisation du chariot 94 illustrée aux figures 23 et 24, et qu'ils présentent alors une extrémité supérieure à un niveau supérieur à celui des méplats 36 mais inférieur à celui des mâchoires 92 et 93 de telle sorte qu'aucune partie du chariot 94 ne puisse venir au contact de la console de support 89 lors de l'utilisation du chariot 94.

A un même niveau des axes 95, les quatre arbres 116 portent, avec possibilité de rotation libre autour de l'axe 115 respectif mais sans autre possibilité de déplacement relatif, un galet respectif 117 qui présente une forme de révolution autour de l'axe 115 respectif. Plus particulièrement, dans le sens d'un éloignement par rapport à l'axe 115 respectif, chaque galet présente une gorge annulaire continue 118, de révolution autour de cet axe 115, délimitée par un fond 119 cylindrique de révolution autour de cet axe 115 et par deux flancs 120, 121 qui s'évasent à partir du fond 119, dans le sens d'un éloignement par rapport à l'axe 115, respectivement vers le haut et vers le bas, avec une forme tronconique de révolution autour de cet axe jusqu'à se raccorder à une face extrême plane non référencée, perpendiculaire à cet axe, du galet 117. Le fond 119 de la gorge 118 présente, parallèlement à l'axe 115 respectif, une dimension sensiblement égale à la dimension e₅ des méplats 36 du corps 3 de façon à pouvoir s'appliquer contre l'un d'entre eux, et le flanc 120 présente par rapport à l'axe 115 respectif une obliquité correspondant à celle que chaque face en biseau 35 du corps 3 présente par rapport au plan 5 par exemple dans la configuration de repos, c'est-à-dire de l'ordre de 45° dans l'exemple illustré, cette obliquité des faces en biseau 35 ne variant que de façon négligeable de l'une à l'autre des configurations précitées du corps 3. L'obliquité du flanc 121 par rapport à l'axe 115 respectif peut être également de l'ordre de 45°.

Ainsi, par action sur les vis 109 dans le sens d'un rapprochement des coulisseaux 108 correspondants vis-à-vis du plan 5, on peut amener les galets 117 dans la position d'utilisation illustrée à la figure 3, dans laquelle les galets 118 d'une même paire de coulisseaux 108, disposés respectivement de part et d'autre du plan 5, symétriquement l'un de l'autre par rapport à celui-ci, s'appliquent par le fond 119 de la gorge 118 respective sur l'un, respectif, des méplats 36 du corps 3, alors que les flancs 120 s'appuient sur la zone des faces en biseau 35 directement adjacente à chacun des méplats 36, respectivement, à un niveau inférieur à celui des mâchoires 92, 93 pour éviter tout contact des galets 117 avec celles-ci, dans des conditions propres à retenir les galets 117 et avec eux l'ensemble du chariot 94 à l'encontre d'une chute et que les flancs 121 prennent appui sur le corps 3 à la jonction entre chaque méplat 36 et le pan 37 correspondant, respectivement, dans des conditions propres à retenir les galets 117 et avec eux le chariot 94 à l'encontre de tout autre déplacement par rapport au corps de montage 3 et à l'ensemble du rail 1, à l'exception d'un déplacement longitudinal par roulement des galets 117 le long du corps 3.

Les glissières 104, les coulisseaux 108 et les galets 118 sont dimensionnés de telle sorte que l'on puisse également, à partir d'une telle position, écarter les coulisseaux 108 suffisamment pour que les flancs 120 des galets 117 des coulisseaux 108 correspondant à une même glissière 104 soient écartés mutuellement, perpendiculairement au plan 5, d'une distance supérieure à la distance l₁₄ séparant mutuellement les deux méplats 36, perpendiculairement au plan 5, dans la configuration de repos, de telle sorte que l'on puisse dégager le chariot 94 du corps 3 ou l'engager sur celui-ci même lorsque le corps 3 occupe cette configuration de repos, pour des raisons qui apparaîtront plus loin. Ils sont en outre dimensionnés de telle sorte que les deux coulisseaux 108 correspondant à une même glissière 104 puissent être rapprochés suffisamment, du plan 5, pour que la distance entre les fonds 119 des gorges 118 correspondantes soit au plus égale à la distance l₁₀ qui sépare les méplats 36 perpendiculairement au plan 5 dans la configuration de fléchissement élastique maximal, afin de permettre d'amener le corps 3 à cette configuration par poussée au moyen des galets 118 dans le sens d'un rapprochement vis-à-vis du plan 5, par un positionnement approprié des coulisseaux 108 de chaque paire, par rapport au plan 5, suivant la glissière 104 respective.

On observera que la coopération des galets 117 avec le corps de montage 3, quelle que soit la configuration dans laquelle celui-ci est placé par positionnement des galets 117, c'est-à-dire des coulisseaux 108 correspondants, suivant la direction 106, fixe le niveau du châssis 95, suivant la direction 16 du plan 5, par rapport au corps de montage 3 et assure la permanence de la coïncidence des plans longitudinaux moyens de symétrie du chariot 94 et du corps de montage 3, désignés l'un et l'autre par la référence numérique 5.

Par ailleurs, suivant un axe transversal 122 défini par l'intersection des plans 5 et 196, c'est-à-dire perpendiculaire au fond 97 et centré par rapport à celui-ci, ce fond 97 est percé d'un trou taraudé 123 dans lequel est engagée, par un filet 124, une vis coaxiale 125 qui présente en dessous du fond 97 un carré 126 de manoeuvre au moyen d'une clé analogue à la clé 113. Au-dessus du fond 97 mais à un niveau inférieur à celui des bords longitudinaux supérieurs des parois latérales 96 et 103, la vis 125 présente une extrémité supérieure solidarisée en translation suivant l'axe 122, mais avec possibilité de libre rotation relative autour de cet axe 122, avec une chape 127 comportant deux joues parallèles 128 occupant des positions mutuellement symétriques par rapport à l'axe 122. Chacune de ces joues 128 porte solidairement, en saillie dans le sens d'un éloignement par rapport à cet axe 122 suivant un même axe 129 perpendiculaire à celui-ci, un doigt rigide 130 engagé par un ergot terminal respectif 131 dans une lumière rectiligne respective 132, aménagée respectivement dans chacune des parois latérales 96 et 103, suivant le plan 196, et allongée suivant la direction 16, de telle sorte que l'engagement des ergots 131 dans les lumières 132 maintienne les deux joues 128 dans une position mutuellement symétrique par rapport au plan 5. Ainsi, toute rotation de la chape 127 et avec elle de l'axe 129 autour de l'axe 122 par rapport au châssis 95 notamment lors de la rotation de la vis 125 autour de l'axe 122 par rapport au châssis 95 est empêchée, si bien que cette rotation, selon son sens, se traduit par un mouvement de la chape 127 et avec elle de l'axe 129 dans le sens d'un éloignement ou d'un rapprochement, suivant la direction 16, par rapport au fond 97 du châssis 95 et inversement par rapport au rail 1. De préférence, le pas du filet 124 de la vis 125 et celui de l'orifice taraudé 123 sont irréversibles, de telle sorte que, dans les conditions normales d'utilisation qui seront décrites ultérieurement, la chape 127 conserve par rapport au châssis 95 du chariot 94 et par rapport au rail 1 la position qui lui est donnée volontairement par rotation de la vis 125 autour de l'axe 122 par rapport au fond 97 du châssis 95.

Entre les deux joues 128 de la chape 127 est disposé un galet 133 monté tourillonnant autour de l'axe 129 sur l'une et l'autre de façon à pouvoir tourner librement autour de l'axe 129 par rapport à la chape 127 sans autre possibilité de déplacement relatif. Ce galet 133, ainsi disposé centralement par rapport aux axes 115 des galets 117, présente dans le sens d'un éloignement par rapport à l'axe 129 une face périphérique extérieure 134 cylindrique de révolution autour de l'axe 129, laquelle face 134 présente perpendiculairement au plan 5, de façon également répartie de part et d'autre de celui-ci, une dimension qui correspond sensiblement à la largeur l₆ de la bande 6 de la plaque d'usure 2.

Ainsi, lorsque le chariot 94 est accroché au corps de montage 3 du rail 1 comme illustré aux figures 23 et 24, on peut, par réglage de niveau de la chape 127 par rapport au fond 97 du châssis 95, amener le galet 133 dans une position dans laquelle il s'appuie par sa face périphérique extérieure 134, le long d'une génératrice supérieure perpendiculaire au plan 5, contre la bande 6 de la plaque d'usure 2 alors elle-même en appui contre la face de conduction électrique 13 du corps de montage 3, sans s'opposer au roulement longitudinal du chariot 94 le long du rail 1.

Cependant, par réglage de la position du galet 133 suivant la direction 16 par rapport au fond 97 du châssis 95, on peut également rapprocher suffisamment de ce fond 97 le galet 133, par un dimensionnement approprié de celui-ci, de la chape 127 et de la vis 125, pour que la génératrice supérieure de la face périphérique extérieure 134 du galet 133 soit écartée de la face 9 de la bande 6 de la plaque d'usure 2, suivant la direction 16, et ceci d'une distance au moins égale à la profondeur p₂ de la plaque d'usure 2, de façon non représentée mais aisément compréhensible par un Homme du Métier.

Naturellement, le montage du galet 133 qui vient d'être décrit ne constitue qu'un exemple non limitatif, et l'on pourrait choisir d'autres moyens notamment pour assurer le guidage de la chape 127 qui le porte, à la façon d'un coulisseau, par rapport à toute forme de glissière orientée suivant la direction 16 et portée solidairement par le châssis 95, cette glissière étant constituée par les lumières 132 dans l'exemple illustré.

Dans ces conditions, on peut utiliser de la façon suivante le chariot 94 pour effectuer la rénovation d'un rail 1 par changement de sa plaque d'usure 2 sans démonter au préalable ce rail, et plus précisément son corps de montage 3, par rapport au support 89.

Initialement, le rail 1 se présente dans l'état décrit en référence aux figures 7 et 21, c'est-à-dire que la plaque d'usure 2 retient le corps de montage 3 dans sa configuration intermédiaire déterminée de fléchissement élastique. Cet état du rail 1 et cette configuration du corps de montage 3 sont illustrés en trait plein à la figure 23.

Une première opération consiste à installer le chariot 94 sur le rail 1 de telle sorte que les arbres 116 soient situés respectivement de part et d'autre de la plaque d'usure 2 à changer, immédiatement en aval de la jonction 135 de cette plaque d'usure avec une autre plaque d'usure 2 qui doit quant à elle rester en place sur le corps de montage 3, en référence à un sens longitudinal 136 par rapport auquel la paroi frontale 99 portant la patte 100 d'accrochage pour un organe 101 de traction du chariot 94 et la paroi frontale 98 sont disposées respectivement en avant et en arrière.

A cet effet, les coulisseaux 108 correspondant au deux glissières 104 sont initialement écartés au maximum, et le galet 134 descendu au maximum, vers le fond 97 du châssis 95, de façon non illustrée mais aisément compréhensible par un Homme du Métier.

Ainsi, après avoir placé le plan longitudinal moyen de symétrie du châssis 95 en coïncidence avec celui du rail 1, ces deux plans portant la même référence numérique 5, en plaçant l'ensemble du chariot 94 à un niveau inférieur à celui du rail 1, on peut, par un mouvement ascendant du chariot 94, faire monter les galets 118 suivant la direction 16, respectivement de part et d'autre de la plaque d'usure 2 puis du corps 3, pour les amener jusqu'au niveau décrit en référence à la figure 23, auquel les gorges 118 sont placées par leur fond 119 directement en regard de l'un ou l'autre des méplats 36, suivant la direction 106. Compte tenu de son positionnement initial, le galet 134 est alors écarté de la plaque d'usure 2 vers le bas, suivant la direction 16, d'une distance au moins égale à la profondeur p₂ précitée, et de préférence supérieure à cette profondeur p₂.

Alors, par rotation des deux vis 112 dans un sens approprié autour de l'axe respectif 109 par rapport au châssis 95, on amène les deux galets 117 de chaque paire en contact, par le fond 119 de la gorge 118 respective, avec le méplat 36 respectivement correspondant et, par le flanc 120 de la gorge 118 respective, avec la face en biseau 35 respectivement correspondante, ce qui assure la suspension du châssis 95 au corps de montage 3 alors encore dans sa configuration intermédiaire déterminée de fléchissement élastique, correspondant à la retenue solidaire de la plaque d'usure 2. Cependant, on poursuit la manoeuvre des deux vis 112 dans le sens d'un rapprochement mutuel des deux coulisseaux 108 et des deux galets 117 respectivement correspondants, jusqu'à amener le corps 3 dans sa configuration de fléchissement élastique maximal, illustrée en pointillé à la figure 23, ce qui libère progressivement les rebords 7 de la plaque d'usure 2 vis-à-vis des contre- dépouilles 38 du corps de montage 3. Lorsque ce dernier a atteint sa configuration de fléchissement élastique maximal, on arrête la rotation des vis 112. La plaque d'usure 2 est alors totalement libérée à l'emplacement du chariot 94, et il suffit de lui appliquer une légère traction vers le bas pour vaincre d'une part un effet de collage qui peut résulter de la présence de la graisse de contact et d'autre part une tendance de la plaque d'usure 2, encore retenue par ailleurs par le corps de montage 3, à conserver une configuration générale rectiligne ; du fait de la position qu'occupe alors le galet 134, on peut ainsi descendre localement la plaque d'usure 2 suffisamment, en la faisant fléchir, pour la dégager totalement du corps de montage 3, au moins directement en arrière du chariot 94 en référence au sens 136.

Alors, par traction sur le chariot 94 dans le sens 136, au moyen de l'organe 101, on le déplace progressivement sur la totalité de la dimension longitudinale L₁ de la plaque d'usure pour amener successivement des zones longitudinalement localisées du corps d'ancrage 3 à la configuration de fléchissement élastique maximal, ce qui permet de dégager successivement les zones longitudinalement localisées correspondantes du rail d'usure 2. Naturellement, le corps de montage 3 tend à revenir progressivement à sa configuration de repos en arrière du chariot 94 en référence au sens 136 mais on évite que cette tendance se traduise par une solidarisation de la plaque d'usure 2 à nouveau en continuant à appliquer à celle-ci, par exemple manuellement, en arrière du chariot 94 en référence au sens 136, une traction suffisante, vers le bas, pour qu'elle reste à un niveau inférieur à celui du corps de montage 3.

On fait ainsi parcourir du chariot 94, en libérant progressivement la plaque d'usure 2, la totalité de la dimension L₁, qui correspond à peu près à la dimension longitudinale L₂ d'un rail 1 lorsque celui-ci a été fabriqué par le procédé décrit en référence aux figures 1 à 22, c'est-à-dire lorsque les jonctions 135 entre les plaques d'usure 2, par leurs faces 19, coïncident avec la jonction 137 entre le corps de montage 3 par leurs faces frontales 21 ; à cet égard, on a illustré à la figure 4 des rails 1 correspondant à la disposition de la plaque d'usure 2 par rapport au corps de montage 3 illustrée à la figure 17, étant entendu que l'on retrouverait une telle coïncidence en adoptant la position relative illustrée à la figure 18.

A la fin de ce parcours, ce corps de montage 3 du rail 1 est totalement exempt de plaque d'usure 2, et le chariot 94 peut être ramené, en sens opposé au sens 136, à sa position initiale par rapport au corps de montage 3, par exemple par roulement sur celui-ci, ce qui replace le corps d'ancrage 3 dans sa configuration de fléchissement élastique maximal à proximité immédiate de la jonction 135 précitée.

Si nécessaire, on peut ensuite procéder à un brossage et à un nouveau graissage des faces 40 et des contre- dépouilles 38 du corps de montage 3.

On peut alors introduire entre les galets 134 et la tête 23 du corps de montage 3, en sens opposé au sens 136, une zone longitudinalement extrême d'une nouvelle plaque d'usure 2 dont on fait coïncider le plan longitudinal moyen de symétrie avec celui du corps de montage 3 puis, en provoquant au moyen de la vis 125 une montée du galet 133 jusqu'à ce qu'il vienne occuper à nouveau sa position illustrée aux figures 23 et 24, on peut emboîter cette zone extrême de la nouvelle plaque d'usure sur la tête 23 retenue localement par les galets 117 dans la position de fléchissement élastique maximal, jusqu'à ce que la plaque d'usure 2 vienne occuper localement par rapport au corps de montage 3 la position décrite en référence aux figures 15 à 16, c'est-à-dire vienne s'appliquer localement par la face 10 de la bande centrale 6 contre les arêtes 50 de jonction de chaque facette 39 avec la face 40 de la même demi- tête 46. Cette application s'accompagne d'une flexion de la plaque d'usure 2 immédiatement en avant du chariot 94 en référence au sens 136, mais la plaque d'usure 2 présente une flexibilité suffisante pour que cette flexion n'entraîne pas de déformation plastique.

Après avoir positionné longitudinalement la face frontale 19 de la nouvelle plaque d'usure convenablement par rapport à celle de la plaque d'usure 2 immédiatement voisine vers l'amont en référence au sens 136, afin de réaliser la jonction 135, on provoque au moyen de l'organe de traction 101 une nouvelle translation du chariot 94 dans le sens 136 par rapport au corps de montage 3 en retenant les galets 117 dans leur position d'application, aux méplats 36, d'une poussée propre à amener ce corps 3 dans sa configuration de fléchissement élastique maximal et en maintenant le galet 133 dans sa position dans laquelle la génératrice supérieure de sa face périphérique extérieure 134 se trouve à une distance au moins approximativement égale à l'épaisseur e₁ de la bande centrale 6 de la plaque d'usure 7 par rapport aux arêtes 50 des demi- têtes 46, sous le corps de montage 3, ce qui provoque l'application de la bande 6, par sa face 10, contre les arêtes 50.

Au fur et à mesure de ce mouvement du chariot 94 le long du corps de montage 3, les galets 117 amènent successivement à la configuration de fléchissement élastique maximal des zones longitudinalement localisées du corps de montage 3 qui se succèdent dans le sens 136, et le galet 134 plaque successivement contre les arêtes 50 des demi- têtes 46 du corps de montage 3 des zones localisées de la nouvelle plaque d'usure 2 qui se succèdent également dans le sens 136, moyennant une flexion élastique de la plaque d'usure 2 immédiatement en avant du chariot 94 en référence au sens 136 ; en arrière du chariot 94 en référence à ce sens 136, les zones du rail de montage 3 que le chariot 94 quitte successivement tendent à revenir à la configuration de repos mais se trouvent retenues dans la configuration intermédiaire prédéterminée de fléchissement maximal par application des contre- dépouilles 38 contre les faces 15 des rebords 7 de la plaque d'usure 2, ce qui amène la face 10 de la zone centrale 6 de cette dernière à se plaquer à plat contre les faces 40 des deux demi- têtes 46, lesquelles faces 40 sont alors coplanaires pour constituer la face 13, dans les conditions décrites en référence aux figures 20 et 21.

Une fois le chariot 94 parvenu à proximité immédiate de l'autre face frontale 19 de la nouvelle plaque d'usure 2, de façon non illustrée mais aisément compréhensible par un Homme du Métier, on actionne les vis 112 pour éloigner l'un de l'autre et du plan 5 les galets 117 de chaque paire en maintenant le galet 133 en position, ce qui amène le corps de montage 3, également dans cette zone extrême, à sa configuration intermédiaire déterminée de fléchissement élastique dans laquelle il assure la retenue de la plaque d'usure 2 par butée des deux demi- têtes 46 contre les rebords 7 de celle-ci, avec application, à plat, de la face 10 de la zone centrale 6 de la plaque d'usure 2 sur la face 13 du corps de montage.

Lorsque les galets 117 de chaque paire sont suffisamment éloignés, le chariot 94 peut être détaché du corps de montage 3, c'est-à-dire du rail 1 ainsi reconstitué.

Dans une variante, lorsqu'il s'agit de changer plusieurs plaques d'usure qui se succèdent, on peut également maintenir les galets 117 dans leur position d'application aux méplats 36 du corps de montage 3 d'une poussée propre à amener ce dernier à sa configuration de fléchissement élastique maximal lorsque le chariot 94 parvient ainsi à proximité immédiate l'autre face frontale 19 de la plaque d'usure 2 et provoquer une descente du galet 133 par action sur la vis 125, avant de poursuivre le mouvement du chariot 94 dans le sens 136 le long du rail 1 immédiatement consécutif dans le sens 136 pour en détacher la plaque d'usure 2 de la façon précédemment décrite, avant de mettre en place une nouvelle plaque d'usure 2.

On remarquera que le chariot 94 qui vient d'être décrit, ou tout autre dispositif équivalent, peut être utilisé non seulement pour effectuer la rénovation d'un rail 1 par remplacement de sa plaque d'usure 2, mais également pour fabriquer un rail 1 directement sur son site d'utilisation, après que l'on ait fixé à leurs consoles de support 89 les différents corps de montage 3, dans leur position définitive, c'est-à-dire en une file longitudinale, et sans avoir monté au préalable les plaques d'usure 2 sur ces corps de montage 3.

La pose de plaques d'usure 2 en file longitudinale sur les corps de montage 3 eux-mêmes en file longitudinale peut aisément s'effectuer au moyen du chariot 94 dans les conditions décrites ci-dessus à propos de la pose d'une nouvelle plaque d'usure 2 sur un corps de montage 3, après brossage et graissage des faces 40 et des contre- dépouilles 38 de celui-ci notamment lorsqu'il est réalisé en aluminium ou en alliage d'aluminium.

On observera qu'alors, contrairement au cas d'une fabrication complète de chaque rail 1 en atelier, il est possible de décaler longitudinalement les jonctions 135 entre deux plaques d'usure 2 successives par rapport aux jonctions 137 entre deux corps de montage 3 successifs, par exemple comme on l'a illustré à la figure 24 en représentant en trait mixte une deuxième position de la jonction 137, de telle sorte que chaque plaque d'usure 2 contribue à assurer une continuité mécanique entre deux corps de montage 3 successifs, et qu'un éventuel défaut d'alignement entre cas derniers soit sans effet sur l'alignement des plaques d'usure 2, notamment en termes de coplanéarité de leurs faces 9 destinées au contact avec le frotteur 11, ce qui permet de réduire l'usure de celui-ci par abrasion au passage d'une plaque d'usure 2 à la suivante.

Enfin, un Homme du Métier comprendra aisément que le chariot 94, ou un dispositif équivalent, ne travaillant que sur une zone longitudinalement localisée du corps de montage 3 et de chaque plaque d'usure 2 ou de chaque rail 1 peut être utilisé non seulement sur site, mais également en atelier à la place des barres 81 et des vérins 82 d'actionnement de ces dernières, dont le rôle est joué localement par les galets 117 et les vis 112, respectivement, et à la place du rouleau 86, dont le rôle est joué par le galet 133.

Un Homme du Métier comprendra également aisément que, bien que l'on ait décrit un mode de mise en oeuvre préféré de l'invention dans ses différents aspects, ce mode de mise en oeuvre est susceptible de nombreuses variantes sans que l'on sorte pour autant du cadre de cette invention.

## Revendications

1. Procédé de fabrication d'un rail longitudinal (1) d'alimentation d'un mobile (11) en électricité, du type comportant deux composants longitudinaux (2, 3) mutuellement solidaires, électriquement conducteurs, présentant des sections transversales respectives sensiblement constantes et un plan longitudinal moyen de symétrie (5) commun, à savoir un corps (3) de montage sur un support (39) et une plaque (2) d'usure par le mobile (11),
- le corps de montage (3) comportant, dans des positions mutuellement opposées suivant une direction transversale (16) dudit plan (5), d'une part une base longitudinale rigide (22) de montage sur le support et d'autre part une tête longitudinale (23) de réception de la plaque d'usure (2), laquelle tête (23) est délimitée dans le sens d'un éloignement par rapport à la base (22), suivant ladite direction (16), par une face (13) de conduction électrique, chevauchant ledit plan (5), et présente une contre-dépouille (38) dans le sens d'un éloignement par rapport audit plan (5), respectivement de part et d'autre de la face (13) de conduction électrique,
- la plaque (2) comportant d'une part une bande centrale plate (6) de transmission d'électricité au mobile (11), chevauchant ledit plan (5), présentant à l'opposé de la base (22) suivant ladite direction (16) une face (9) de contact pour le mobile (11) et vers la base (22) suivant ladite direction (16) une face (10) de conduction électrique, en appui à plat sur la face (13) de conduction électrique du corps (3), et d'autre part deux rebords latéraux (7) disposés respectivement de part et d'autre dudit plan (5) et formant une saillie vers la base (22), suivant ladite direction (16), par rapport à la bande centrale (6), chacun des rebords (7) présentant vers ledit plan (5) une face (15) d'accrochage sur le corps (3), laquelle face d'accrochage (15) se rapproche dudit plan (5) dans le sens d'un éloignement par rapport à la bande centrale (6) suivant ladite direction (16) pour définir une forme en crochet en prise avec l'une, respective, des contre-dépouilles (38) de telle sorte que la plaque d'usure (2) soit retenue solidairement sur la tête (23) du corps de montage (3) par effet d'emboîtement mutuel,
ce procédé comportant une succession d'étapes dont la première consiste à
a) préfabriquer séparément
- d'une part le corps de montage (3) en le conformant de telle sorte que la tête (23) soit divisée suivant ledit plan (5) en deux moitiés (46) raccordées mutuellement par la base (22) et délimitant par ailleurs entre elles une fente longitudinale (45) ouverte dans le sens d'un éloignement par rapport à la base (22) suivant ladite direction (16), chacune des deux moitiés (46) présentant à l'opposé de la base (22) suivant ladite direction (16) une extrémité libre (47) comportant une moitié respective (40) de la face (13) de conduction électrique du corps (3) et l'une, respective, des contre-dépouilles (38) et étant susceptible de fléchir élastiquement par rapport à la base (22), notamment dans le sens d'un rapprochement mutuel à partir d'une configuration de repos dans laquelle le corps de montage (3) est préfabriqué et jusqu'à une configuration de fléchissement élastique maximal, les deux moitiés (40) de la face (13) de conduction électrique du corps (3) présentant par rapport audit plan (5) une orientation telle qu'elles s'éloignent de la base (22) dans le sens d'un rapprochement par rapport audit plan (5) dans la configuration de repos, et
- d'autre part la plaque d'usure (2) en la conformant de telle sorte que ses rebords (7) définissent entre eux, perpendiculairement audit plan (5), dans une zone (18) de rapprochement maximal par rapport à celui-ci dans le sens d'un éloignement par rapport à la bande centrale (6) suivant ladite direction (16), une largeur (l₁) inférieure à la largeur maximale (l₂, l₅) que la tête (23) présente, perpendiculairement audit plan (5), entre les moitiés (40) de la face (13) de conduction électrique du corps (3) et les contre-dépouilles (38), dans la configuration de repos,
ce procédé étant caractérisé en ce que:
lors de l'étape a), on préfabrique
- le corps de montage (3) en le conformant de telle sorte que les deux moitiés (40) de la face (13) de conduction électrique du corps (3) présentent par rapport audit plan (5) une orientation telle qu'elles se rapprochent de la base (22) dans le sens d'un rapprochement par rapport audit plan (5) dans la configuration de fléchissement élastique maximal et que, dans une configuration intermédiaire déterminée de fléchissement élastique, dans laquelle ladite fente (45) est encore ouverte dans le sens d'un éloignement par rapport à la base (22) suivant ladite direction (16), elles soient mutuellement coplanaires et perpendiculaires audit plan (5) pour constituer alors ensemble la face (13) de conduction électrique du corps (3), plane et perpendiculaire audit plan (5), et
- d'autre part la plaque d'usure (2) en la conformant définitivement de telle sorte que ladite face (9) de contact pour le mobile (11) et ladite face (10) de conduction électrique de la bande centrale (6) soient planes et perpendiculaires audit plan (5) et que ses rebords (7) définissent entre eux, perpendiculairement audit plan (5), dans une zone (18) de rapprochement maximal par rapport à celui-ci dans le sens d'un éloignement par rapport à la bande centrale (6) suivant ladite direction (16), une largeur (l₁) inférieure à la largeur maximale (l₂, l₅) que la tête (23) présente, perpendiculairement audit plan (5), entre les moitiés (40) de la face (13) de conduction électrique du corps (3) et les contre-dépouilles (38), non seulement dans la configuration de repos mais également dans la configuration intermédiaire déterminée, mais au moins égale, notamment supérieure, à la largeur maximale (13) que la tête (23) présente, perpendiculairement audit plan (5), entre les moitiés (40) de la face (13) de conduction électrique du corps (3) et les contre-dépouilles (38), dans la configuration de fléchissement élastique maximal, et au moins égale, notamment supérieure, à la largeur minimale (l₁₁) que la tête (23) présente, perpendiculairement audit plan (5), au niveau des contre-dépouilles (38) dans la configuration intermédiaire déterminée, et de telle sorte que les faces d'accrochage (15) définissent avec ladite face (10) de conduction électrique de la plaque d'usure (2) une forme complémentaire de la forme que les contre-dépouilles (38) définissent avec la face (13) de conduction électrique du corps (3) dans ladite configuration intermédiaire déterminée,
et en ce qu'il comporte, après l'étape a), la succession les étapes consistant à :
b) appliquer aux deux moitiés (46) de la tête (23) des poussées antagonistes de rapprochement mutuel, perpendiculairement audit plan (5), pour les amener de la configuration de repos à la configuration de fléchissement élastique maximal,
c) en maintenant lesdites poussées pour retenir les deux moitiés (46) de la tête (23) dans la configuration de fléchissement élastique maximal, emboîter la plaque d'usure (2) sur la tête (23) pour placer la face (10) de conduction électrique de la plaque d'usure (2) en appui sur les moitiés (40) de la face (13) de conduction électrique du corps (3) et pour placer les rebords (7) respectivement de part et d'autre de la tête (23), en regard des contre-dépouilles (38),
d) relâcher lesdites poussées en maintenant la face (10) de conduction électrique de la plaque d'usure (2) en appui sur les moitiés (40) de la face (13) de conduction électrique du corps (3), de telle sorte que les deux moitiés (46) de la tête (23) fléchissent élastiquement dans le sens d'un éloignement mutuel, perpendiculairement audit plan (5), et viennent buter dans ce sens, par les contre-dépouilles (38), contre les faces d'accrochage (15) des rebords (7) de la plaque d'usure (2), qui retiennent les deux moitiés (46) de la tête (23) en précontrainte de fléchissement élastique dans ladite configuration déterminée dans laquelle, en outre, les deux moitiés (40) de la face (13) de conduction électrique du corps (3) sont mutuellement coplanaires si bien que la face (10) de conduction électrique de la plaque d'usure (2) s'y applique à plat.

2. Procédé de fabrication selon la revendication 1, caractérisé en ce que l'on préfabrique la plaque d'usure (2) en monobloc lors de l'étape a), dans un matériau choisi dans un groupe comportant l'acier inoxydable et le cuivre et ses alliages.

3. Procédé de fabrication selon l'une quelconque des revendications 1 et 2, caractérisé en ce que l'on préfabrique le corps de montage (3) en monobloc lors de l'étape a), dans un matériau choisi dans un groupe comportant l'aluminium et ses alliages.

4. Procédé de fabrication selon l'une quelconque des revendications 1 à 3, caractérisé en ce que, lors de l'étape a), on pré-fabrique les corps de montage (3) et la plaque d'usure (2) de telle sorte que les contre-dépouilles (38) et les faces d'accrochage (15) soient planes et forment un même angle (α₁) respectivement par rapport à la moitié correspondante (40) de la face (13) de conduction électrique du corps (3) et par rapport à la face (10) de conduction électrique de la bande centrale (6) si bien qu'à la fin de l'étape d), les contre-dépouilles (38) et les faces d'accrochage (15) sont en appui mutuel à plat.

5. Procédé de fabrication selon l'une quelconque des revendications 1 à 4, caractérisé en ce que l'on applique une graisse de contact au moins sur l'une desdites faces (10, 40) de conduction électrique et, de préférence, sur les contre-dépouilles (38) et/ou les faces d'accrochage (15) avant l'étape c), de préférence en précédant immédiatement ou en accompagnant cette application d'un brossage.

6. Procédé de fabrication selon l'une quelconque des revendications 1 à 5, caractérisé en ce que lors de l'étape a), on dimensionne les contre-dépouilles (38) et les rebords (7) de la plaque d'usure (2), suivant ladite direction (16), de telle sorte que la partie de chaque contre-dépouille (38) qui est la plus éloignée de la face (13) de conduction électrique du corps (3) suivant ladite direction (16) reste dégagée du rebord (7) respectivement correspondant à la fin de l'étape d).

7. Procédé de fabrication selon l'une quelconque des revendications 1 à 6, caractérisé en ce qu'on le met en oeuvre simultanément sur la totalité de la dimension longitudinale (L₁, L₂) du corps de montage (3) et de la plaque d'usure (2).

8. Procédé de fabrication selon l'une quelconque des revendications 1 à 6, caractérisé en ce qu'on le met en oeuvre successivement dans des zones longitudinalement localisées du corps de montage (3) et de la plaque d'usure (2), se succédant longitudinalement dans un sens longitudinal déterminé (136).

9. Procédé de fabrication selon l'une quelconque des revendications 1 à 8, caractérisé en ce que l'on fixe le corps de montage (3) au support (39), dans une position déterminée d'utilisation, sur un site d'utilisation du rail (1) entre les étapes a) et b) et en ce que l'on met en oeuvre les étapes b), c), d) en laissant le corps de montage (3) fixé au support (39), dans ladite position déterminée, sur le site.

10. Procédé de fabrication selon la revendication 9, caractérisé en ce que l'on fixe plusieurs exemplaires du corps de montage (3) au support (39), dans ladite position déterminée, sur le site, entre les étapes a) et b), en plaçant lesdits exemplaires dans le prolongement l'un de l'autre en direction longitudinale, et en ce que l'on met en oeuvre les étapes b), c), d) en laissant lesdits exemplaires fixés au support (39), dans ladite position déterminée, sur le site, au moyen de plusieurs exemplaires de ladite plaque d'usure (2), que l'on place dans le prolongement l'un de l'autre en direction longitudinale en décalant longitudinalement leurs jonctions mutuelles (135) par rapport aux jonctions mutuelles (137) desdits exemplaires du corps de montage (3).

11. Corps longitudinal, électriquement conducteur, destiné à la réalisation d'un rail longitudinal (1) d'alimentation d'un mobile (11) en électricité notamment par mise en oeuvre du procédé selon l'une quelconque des revendications 1 à 10 pour constituer un corps (3) de montage de ce rail (1) sur un support (39), ledit corps (3) présentant une section transversale sensiblement constante et un plan longitudinal moyen de symétrie (5) et comportant, dans des positions mutuellement opposées suivant une direction transversale (16) dudit plan (5), d'une part une base longitudinale rigide (22) de montage sur le support et d'autre part une tête longitudinale (23) de réception d'une plaque d'usure (2), laquelle tête (23) présente une contre-dépouille (38) dans le sens d'un éloignement par rapport audit plan (5), respectivement de part et d'autre de celui-ci, et est divisée suivant ledit plan (5) en deux moitiés (46) raccordées mutuellement par la base (22) et délimitant par ailleurs entre elles une fente longitudinale (45) ouverte dans le sens d'un éloignement par rapport à la base (22) suivant ladite direction (16), chacune des deux moitiés (46) présentant à l'opposé de la base (22) suivant ladite direction (16) une extrémité libre (47) comportant une face extrême plane (40) et l'une, respective, des contre-dépouilles (38) et étant susceptible de fléchir élastiquement par rapport à la base (22), notamment dans le sens d'un rapprochement mutuel à partir d'une configuration de repos dans laquelle le corps de montage (3) est préfabriqué et jusqu'à une configuration de fléchissement élastique maximal, les deux faces extrêmes (40) présentant par rapport audit plan (5) une orientation telle qu'elles s'éloignent de la base (22) dans le sens d'un rapprochement par rapport audit plan (5) dans la configuration de repos,
caractérisé en ce que les deux faces extrêmes (40) présentent par rapport audit plan (5) une orientation telle qu'elles se rapprochent de la base (22) dans le sens d'un rapprochement par rapport audit plan (5) dans la configuration de fléchissement élastique maximal et que, dans une configuration intermédiaire déterminée de fléchissement élastique, dans laquelle ladite fente (45) est encore ouverte dans le sens d'un éloignement par rapport à la base (22) suivant ladite direction (16), elles soient mutuellement coplanaires et perpendiculaires audit plan (5) pour former ensemble une face plane (13) délimitant la tête (23) dans le sens d'un éloignement par rapport à la base (22), suivant ladite direction (16), entre les contre-dépouilles (38).

12. Corps longitudinal selon la revendication 11, caractérisé en ce qu'il est réalisé en monobloc, dans un matériau choisi dans un groupe comportant l'aluminium et ses alliages.

13. Corps longitudinal selon l'une quelconque des revendications 11 et 12, caractérisé en ce que chaque contre-dépouille (38) est formée par un pan plan (38) tourné dans le sens d'un éloignement par rapport audit plan (5) et se rapprochant progressivement de celui-ci dans le sens d'un rapprochement par rapport à la base (22) suivant ladite direction (16), au moins dans ladite configuration intermédiaire déterminée.

14. Corps longitudinal selon l'une quelconque des revendications 11 à 13, caractérisé en ce que chaque moitié (46) de la tête (23) comporte, entre la face extrême (40) respective et la contre-dépouille (38) respective, une facette extrême (39) tournée dans le sens d'un éloignement par rapport audit plan (5), raccordant la face extrême (40) respective et la contre-dépouille (38) respective et se rapprochant progressivement dudit plan (5) dans le sens d'un éloignement par rapport à la base (22) suivant ladite direction (16), notamment dans la configuration de fléchissement élastique maximal.

15. Corps longitudinal selon l'une quelconque des revendications 11 à 14, caractérisé en ce que chaque moitié (46) de la tête (23) comporte, dans le sens d'un éloignement par rapport à la base (22) suivant ladite direction (16), une partie extrême rigide (47) groupant notamment ladite face extrême (40) respective et ladite contre-dépouille (38) respective, et, entre ladite partie extrême rigide (47) et la base (22), une partie intermédiaire (48) de raccordement de ladite partie extrême (47) à la base (22), ladite partie intermédiaire (48) définissant en comparaison avec la base (22) et ladite partie extrême (47) une zone affaiblie de fléchissement élastique privilégié de la moitié respective (46) de la tête (23) entre la configuration de repos et la configuration de fléchissement élastique maximal.

16. Corps longitudinal selon la revendication 15, caractérisé en ce que chaque contre-dépouille (38) est plus éloignée de la base (22), suivant ladite direction (16), que le raccordement entre ladite partie extrême rigide (47) respective et ladite partie intermédiaire (48) élastiquement flexible respective.

17. Corps longitudinal selon l'une quelconque des revendications 15 et 16, caractérisé en ce que chaque partie extrême rigide (47) présente un prolongement (89) vers la base (22) suivant ladite direction (16), longeant la partie intermédiaire élastiquement flexible (48) respective dans le sens d'un éloignement par rapport audit plan (5) en formant avec elle une fente longitudinale (32) respective ouverte vers la base (22) suivant ladite direction (16).

18. Corps longitudinal selon la revendication 17, caractérisé en ce que ledit prolongement (89) est conformé de façon à permettre l'accrochage d'un capot isolant de forme traditionnelle sur la base (22).

19. Corps longitudinal selon l'une quelconque des revendications 11 à 18, caractérisé en ce que chaque moitié (46) de la tête (23) présente, dans le sens d'un éloignement par rapport audit plan (5), plus près de la base (22) que la contre-dépouille (28) respective, un méplat (36) respectif, approximativement parallèle audit plan (5), pour l'application d'une poussée respective vers celui-ci afin d'amener ladite moitié (46) de la configuration de repos à la configuration de fléchissement élastique maximal.

20. Corps longitudinal selon la revendication 19 dans sa relation de dépendance vis-à-vis de l'une quelconque des revendications 17 et 18, caractérisé en ce que le méplat (36) est aménagé sur le prolongement respectif (89) et plus proche de la base (22), suivant ladite direction (16), que le raccordement entre la partie extrême rigide (47) respective et la partie intermédiaire élastiquement flexible (48) respective.

21. Corps longitudinal selon l'une quelconque des revendications 19 et 20, caractérisé en ce que le méplat (36) est placé en saillie, dans le sens d'un éloignement par rapport audit plan (5), par rapport aux zones avoisinantes (35, 37) respectives du corps (3).

22. Corps longitudinal selon l'une quelconque des revendications 11 à 21, caractérisé en ce que chaque moitié (46) de la tête (23) comporte, dans la zone de ladite fente (45) la plus éloignée de la base (22) suivant ladite direction (16), une zone (41) de butée contre l'autre moitié (46) de la tête (23) dans la configuration de fléchissement élastique maximal.

23. Plaque longitudinale, électriquement conductrice, destinée à la réalisation d'un rail longitudinal (1) d'alimentation d'un mobile (11) en électricité notamment par mise en oeuvre du procédé selon l'une quelconque des revendications 1 à 10, pour constituer une plaque d'usure (2) de ce rail (1) par un mobile (11), ladite plaque (2) présentant une section transversale sensiblement constante et un plan longitudinal moyen de symétrie (5) et comportant une bande centrale plate (6) chevauchant ledit plan (5), présentant deux faces (9, 10) mutuellement opposées, et deux rebords latéraux (7) situés respectivement de part et d'autre dudit plan (5) et placés en saillie sur la même (10) desdites faces (9, 10), présentant vers ledit plan (5) une face (15) qui se rapproche de celui-ci dans le sens d'un éloignement par rapport à la bande centrale (6) suivant une direction transversale (16) dudit plan (5) pour définir une forme en crochet,
caractérisée en ce que lesdites faces (9, 10) de sa bande centrale (6) sont planes et perpendiculaires audit plan (5).

24. Plaque longitudinale selon la revendication 23, caractérisée en ce qu'elle est réalisée en monobloc, dans un matériau choisi dans un groupe comportant l'acier inoxydable et le cuivre et ses alliages.

25. Plaque longitudinale selon l'une quelconque des revendications 23 et 24, caractérisée en ce que lesdites faces (15) des rebords (7) sont planes.

26. Plaque longitudinale selon l'une quelconque des revendications 23 à 25, caractérisée en ce que chaque rebord (7) présente un bord libre rectiligne (18), longitudinal, délimitant ladite face respective (15) dans le sens d'un éloignement par rapport à la bande centrale (6) suivant ladite direction (16).

27. Plaque longitudinale selon les revendications 25 et 26 en combinaison, caractérisé en ce que chaque rebord (7) est plat et raccordé à la bande centrale (6) par un pli longitudinal respectif (8).

28. Rail longitudinal d'alimentation d'un mobile (11) en électricité, susceptible d'être réalisé par mise en oeuvre du procédé selon l'une quelconque des revendications 1 à 10 et appartenant au type comportant deux composants longitudinaux (2, 3) mutuellement solidaires, électriquement conducteurs, présentant des sections transversales respectives sensiblement constantes et un plan longitudinal moyen de symétrie (5) commun, à savoir un corps (3) de montage sur un support (39) et une plaque (2) d'usure par le mobile (11),
- le corps de montage (3) présentant, dans des positions mutuellement opposées suivant une direction transversale (16) dudit plan (5), d'une part une base longitudinale rigide (22) de montage sur le support et d'autre part une tête longitudinale (23) de réception de la plaque d'usure (2), laquelle tête (23) est délimitée dans le sens d'un éloignement par rapport à la base (22), suivant ladite direction (16), par une face (13) de conduction électrique, chevauchant ledit plan (5), et présente une contre-dépouille (38) dans le sens d'un éloignement par rapport audit plan (5), respectivement de part et d'autre de la face (13) de conduction électrique, la tête (23) du corps de montage (3) étant divisée suivant ledit plan (5) en deux moitiés (46) raccordées mutuellement par la base (22) et délimitant par ailleurs entre elles une fente longitudinale (45), chacune des deux moitiés (46) présentant à l'opposé de la base (22) suivant ladite direction (16) une extrémité libre (47) comportant une moitié respective (40) de la face (13) de conduction électrique du corps (3) et l'une, respective, des contre-dépouilles (38),
- la plaque d'usure (2) comportant d'une part une bande centrale plate (6) de transmission d'électricité au mobile (11), chevauchant ledit plan (5), présentant à l'opposé de la base (22) suivant ladite direction (16) une face (9) de contact pour le mobile (11) et vers la base (22) suivant ladite direction (16) une face (10) de conduction électrique, en appui à plat sur la face (13) de conduction électrique du corps (3), et d'autre part deux rebords latéraux (7) disposés respectivement de part et d'autre dudit plan (5) et formant une saillie vers la base (22), suivant ladite direction (16), par rapport à la bande centrale (6), chacun des rebords (7) présentant vers ledit plan (5) une face (15) d'accrochage sur le corps (3), laquelle face d'accrochage (15) se rapproche dudit plan (5) dans le sens d'un éloignement par rapport à la bande centrale (6) suivant ladite direction (16) pour définir une forme en crochet en prise avec l'une, respective, des contre-dépouilles (38) de telle sorte que la plaque d'usure (2) soit retenue solidairement sur la tête (23) du corps (3) de montage par effet d'emboîtement mutuel et que lesdites moitiés (46) de la tête (23) soient retenues dans une configuration déterminée de précontrainte de fléchissement élastique par appui des contre-dépouilles (38) contre les faces d'accrochage (15) de la plaque d'usure (2) dans le sens d'un éloignement par rapport audit plan (5),
caractérisé en ce que le corps de montage (3) et la plaque d'usure (2) sont conformes à l'une quelconque des revendications 11 à 22 et 23 à 27, respectivement, et en ce que la face (13) de conduction électrique du corps de montage (3) est plane et perpendiculaire audit plan (5), de même que la face (13) de conduction électrique de la plaque d'usure (2), et ladite fente longitudinale (45) est ouverte dans le sens d'un éloignement par rapport à la base (22) suivant ladite direction (16) dans ladite configuration déterminée de précontrainte de fléchissement élastique dans laquelle lesdites moitiés (46) de la tête (23) sont retenues par appui des contre-dépouilles (38) contre les faces d'accrochage (15) de la plaque d'usure (2) dans le sens d'un éloignement par rapport audit plan (5).

29. Rail longitudinal selon la revendication 28, caractérisé en ce que les contre-dépouilles (38) et les faces d'accrochage (15) sont planes, se rapprochent dudit plan (5) dans le sens d'un rapprochement par rapport la base (22) suivant ladite direction (16), selon les revendications 13 et 25 respectivement, et sont en appui mutuel à plat.

30. Rail longitudinal selon l'une quelconque des revendications 28 et 29, caractérisé en ce qu'une graisse de contact est intercalée au moins entre lesdites faces de conduction électrique (10, 13) et, de préférence, entre les contre-dépouilles (38) et les faces d'accrochage (15).

31. Rail longitudinal selon l'une quelconque des revendications 28 à 30, caractérisé en ce que la partie de chaque contre-dépouille (38) qui est la plus éloignés de la face (13) de conduction électrique du corps (3) suivant ladite direction (16) est dégagée du rebord (7) respectivement correspondant de la plaque d'usure (2).

32. Rail longitudinal selon l'une quelconque des revendications 28 à 31, caractérisé en ce que chaque moitié (46) de la tête (23) est susceptible de fléchir élastiquement par rapport à la base (22), dans le sens d'un rapprochement par rapport audit plan (5), jusqu'à une configuration de fléchissement élastique maximal dans laquelle la dimension maximale (l₃) que la tête (23) présente, perpendiculairement audit plan (5), entre les moitiés (40) de la face (13) de conduction électrique du corps (3) et les contre-dépouilles (38), est au plus égale à la largeur (l₁) que les rebords (7) définissent entre eux, perpendiculairement audit plan (5), dans une zone (18) de rapprochement maximal par rapport à celui-ci dans le sens d'un éloignement par rapport à la bande centrale (6) suivant ladite direction (16).

33. Rail longitudinal selon la revendication 32, caractérisé en ce que chaque moitié (46) de la tête (23) comporte, dans la zone de ladite fente (45) la plus éloignée de la base (22) suivant ladite direction (16), une zone (41) de butée contre l'autre moitié (46) de la tête (23) dans la configuration de fléchissement élastique maximal.

34. Rail longitudinal selon l'une quelconque des revendications 32 et 33, caractérisé en ce que chaque moitié (46) de la tête (23) présente, dans le sens d'un éloignement par rapport audit plan (5), plus près de la base (22) que le rebord (7) correspondant de la plaque d'usure (2), un méplat (36) respectif, approximativement parallèle audit plan (5), pour l'application d'une poussée respective vers celui-ci afin d'amener ladite moitié (40) à la configuration de fléchissement élastique maximal.

35. Rail longitudinal selon la revendication 34, caractérisé en ce que chaque méplat (36) est placé en saillie, dans le sens d'un éloignement par rapport audit plan (5), par rapport aux zones avoisinantes (35, 37) respectives du rail (1).

36. Procédé de rénovation d'un rail (1) selon l'une quelconque des revendications 32 à 35, dont le corps de montage (3) est fixé à un support (39) dans une position déterminée d'utilisation, sur un site d'utilisation du rail (1), et dont la plaque d'usure (2) est usée ou endommagée, caractérisé en ce que l'on met en oeuvre sur ledit site, en laissant le corps de montage (3) fixé au support (39), dans ladite position déterminée, la succession des étapes consistant à :
e) appliquer aux deux moitiés (46) de la tête (23) des poussées antagonistes de rapprochement mutuel, perpendiculairement audit plan (5), pour les amener de la configuration déterminée de précontrainte de fléchissement élastique à la configuration de fléchissement élastique maximal,
f) en maintenant lesdites poussées pour retenir les deux moitiés (46) de la tête (23) dans la configuration de fléchissement élastique maximal, déboîter la plaque d'usure (2) de la tête (23) pour la séparer du corps de montage (3),
g) en maintenant lesdites poussées pour retenir les deux moitiés (46) de la tête (23) dans la configuration de fléchissement élastique maximal, emboîter une nouvelle plaque d'usure (2) sur la tête (23) pour placer la face (10) de conduction électrique de la nouvelle plaque d'usure (2) en appui sur les moitiés (40) de la face (13) de conduction électrique du corps (3) et pour placer les rebords (7) respectivement de part et d'autre de la tête (23), en regard des contre-dépouilles (38),
h) relâcher lesdites poussées en maintenant la face (10) de conduction électrique de la nouvelle plaque d'usure (2) en appui sur les moitiés (40) de la face (13) de conduction électrique du corps (3), de telle sorte que les deux moitiés (46) de la tête (23) fléchissent élastiquement dans le sens d'un éloignement mutuel, perpendiculairement audit plan (5), et viennent buter dans ce sens, par les contre-dépouilles (38), contre les faces d'accrochage (15) des rebords (7) de la nouvelle plaque d'usure (2), qui retiennent les deux moitiés (46) de la tête (23) en précontrainte de fléchissement élastique dans ladite configuration déterminée dans laquelle, en outre, les deux moitiés (40) de la face (13) de conduction électrique du corps (3) sont mutuellement coplanaires si bien que la face (10) de conduction électrique de la nouvelle plaque d'usure (2) s'y applique à plat.

37. Procédé de rénovation d'un rail selon la revendication 36, caractérisé en ce que, entre les étapes f) et g), on met en oeuvre la succession des étapes consistant à :
i) relâcher lesdites poussées de telle sorte que les deux moitiés (46) de la tête (23) fléchissent élastiquement dans le sens d'un éloignement mutuel, perpendiculairement audit plan (5), et viennent à une configuration de repos,
j) appliquer à nouveau lesdites poussées aux deux moitiés (46) de la tête (23) pour les amener de la configuration de repos à la configuration de fléchissement élastique maximal.

38. Procédé de rénovation selon l'une quelconque des revendications 36 et 37, caractérisé en ce qu'on le met en oeuvre simultanément sur la totalité de la dimension longitudinale (L₂) du rail (1).

39. Procédé de rénovation d'un rail selon l'une quelconque des revendications 36 et 37, caractérisé en ce qu'on le met en oeuvre successivement dans des zones longitudinalement localisées du rail (1), se succédant longitudinalement dans un sens longitudinal déterminé.

40. Procédé de rénovation d'un rail selon l'une quelconque des revendications 36 à 39, caractérisé en ce qu'on le met en oeuvre sur un site d'utilisation du rail (1), dont le corps de montage (3) est fixé à un support (39) dans une position déterminée d'utilisation, en laissant le corps de montage (3) fixé au support (39).

41. Procédé de rénovation d'un rail selon la revendication 40, caractérisé en ce qu'on le met en oeuvre sur plusieurs exemplaires du rail (1), placés dans le prolongement longitudinal l'un de l'autre, en décalant longitudinalement les jonctions mutuelles (135) des exemplaires de la nouvelle plaque d'usure (2) par rapport aux jonctions mutuelles (137) des exemplaires du corps de montage (3).

42. Chariot pour la mise en oeuvre du procédé selon la revendication 8 ou du procédé selon la revendication 39, caractérisé en ce qu'il comporte :
- un châssis rigide (95) présentant un plan longitudinal moyen de symétrie (5),
- des moyens (117) de liaison mécanique amovible entre le châssis (95) et le corps de montage (3) dans une orientation dans laquelle ledit plan longitudinal moyen de symétrie (5) coïncide avec le plan longitudinal moyen de symétrie (5) de ce dernier, lesdits moyens assurant d'une part un supportage du châssis (95) par le corps de montage (3) et d'autre part un guidage du châssis (95) à la translation longitudinale par rapport à celui-ci,
- des organes latéraux de poussée (117) disposés respectivement de part et d'autre dudit plan longitudinal et mutuellement symétriques par rapport à celui-ci, à un niveau correspondant à une zone de la tête (23) du corps de montage (3) dégagée par la plaque d'usure (2) lorsque le rail (1) est fabriqué,
- des moyens (104, 112) pour déplacer coercitivement, de façon commandée, les organes latéraux de poussée (117) vers ledit plan (5) et dans le sens d'un éloignement par rapport à celui-ci, perpendiculairement à celui-ci, en conservant leur symétrie mutuelle,
- un organe central de poussée (111) disposé suivant ledit plan (5),
- des moyens (125, 132) pour déplacer coercitivement, de façon commandée, l'organe central de poussée (133) dans un sens et dans l'autre d'une direction transversale (16) dudit plan (5).

43. Chariot selon la revendication 42, caractérisé en ce que les moyens de liaison mécanique (117) sont des moyens de roulement (117).

44. Chariot selon l'une quelconque des revendications 42 et 43, caractérisé en ce que les organes latéraux de poussée (117) comportent au moins une paire de galets (117) montés à la rotation libre autour d'un axe respectif (115) parallèle à ladite direction (16) dudit plan (5) sur un coulisseau respectif (108) et en ce que les moyens (104, 112) pour déplacer les organes latéraux de poussée (117) comportent, sur le chariot (95), des glissières (104) de guidage des coulisseaux (108) suivant une direction (106) perpendiculaire audit plan (5) sans autre possibilité de déplacement relatif et des moyens (112) de positionnement réglable des coulisseaux (108) le long des glissières (104).

45. Chariot selon la revendication 44, caractérisé en ce que les moyens (112) de positionnement réglable des coulisseaux (108) comportent une vis (110) montée à la rotation sur le châssis (95) autour d'un axe (109) perpendiculaire audit plan (5) et immobilisée par rapport au châssis (95) à l'encontre de tout autre déplacement, ladite vis (112) étant en prise avec l'un et l'autre coulisseaux (108) par des filets (110, 111) de pas opposés.

46. Chariot selon l'une quelconque des revendications 44 et 45, caractérisé en ce que les organes latéraux de poussée (117) comportent deux exemplaires de ladite paire, mutuellement symétriques par rapport à un plan transversal déterminé (196) du chariot (95), constituant un plan de symétrie pour l'organe central de poussée (133), et en ce que les moyens (104, 112) pour déplacer les organes latéraux de poussée (117) sont prévus en deux exemplaires respectivement correspondants, mutuellement indépendants.

47. Chariot selon l'une quelconque des revendications 44 à 46, en combinaison avec la revendication 43, caractérisé en ce que les moyens de roulement (117) sont constitués par les galets de ladite paire (117).

48. Chariot selon la revendication 47, le corps de montage (3) et le rail (1) étant conformes aux revendications 21 et 35, respectivement, caractérisé en ce que chaque galet (117) présente une gorge annulaire (118) susceptible de prendre appui sur le corps de montage (3) par un méplat (36) respectif et par des zones (35, 37) situées respectivement de part et d'autre de celui-ci.

49. Chariot selon l'une quelconque des revendications 42 à 48, caractérisé en ce que l'organe central de poussée (133) est un galet (133) monté à la rotation libre autour d'un axe transversal (129) sur un coulisseau (127) et en ce que les moyens (125, 132) pour déplacer l'organe central de poussée (133) comportent sur le chariot (95) une glissière (132) de guidage du coulisseau (127) suivant ladite direction transversale (16) sans autre possibilité de déplacement relatif et des moyens (125) de positionnement réglable du coulisseau (127) le long de la glissière (132).

50. Chariot selon la revendication 49, caractérisé en ce que les moyens (125) de positionnement réglable du coulisseau (127) comportent une vis (125) montée à la rotation sur le coulisseau (127) autour d'un axe transversal (122) dudit plan (5) et immobilisée par rapport au coulisseau (127) à l'encontre de tout autre déplacement, ladite vis (125) étant en prise avec le châssis (95) par un filet (123, 124).
